# EUROPEAN PATENT APPLICATION

(11) **EP 4 842 050 A1**
(43) Date of publication of application: **18.11.2026**
(21) Application number: 24916135.7
(22) Date of filing: 12.01.2024
(51) Int. Cl.: H04W 28/10

(54) **COMMUNICATION METHOD, NETWORK ELEMENT, ACCESS NETWORK EQUIPMENT, COMMUNICATION SYSTEM, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); THOMAS, Emmanuel, Beijing 100085 (CN)
(74) Representative: Stöckeler, Ferdinand
(86) International application number: PCT/CN2024/072192
(87) International publication number: WO 2025/148071

(57) **Abstract**

The present disclosure relates to a communication method, a network element, an access network device, a communication system, and a storage medium. The method comprises; receiving first information sent by a second network element, wherein the first information comprises at least one of the following information: first parameter information, which is used for indicating traffic parameters of a data flow of a first service, and first indication information, which is used for indicating that a dynamic change in the traffic parameters is supported. By means of the solution in the present disclosure, support can be provided for QoS processing during a dynamic change in a flow mode and/or a flow characteristic.

## Description

### TECHNICAL FIELD

The disclosure relates to the field of communication technologies, and more particularly to a communication method, a network element, an access network device, a communication system, and a storage medium.

### BACKGROUND

In communication technologies such as 5th generation mobile networks (5G), mobile media services, online extended reality (XR), online games, and remote control of video-based machines or drones, etc. are expected to contribute increasing traffic to a communication network.

Currently, since eXtended reality (XRM) and interactive media services have characteristic such as a high throughput, a low latency, and a high reliability requirement, there needs to comprehensively consider a quality of service (QoS) characteristic of a specific service data flow (SDF) within a service.

### SUMMARY

Embodiments of the disclosure provide a communication method, a network element, an access network device, a communication system, and a storage medium.

According to a first aspect of embodiments of the disclosure, a communication method is provided. The communication method is applied to a first network element. The above communication method includes: receiving first information sent by a second network element, in which the first information includes at least one of: first parameter information, used to indicate a traffic parameter of a data flow of a first service; or first indication information, used to indicate supporting a dynamic change of a traffic parameter.

According to a second aspect of embodiments of the disclosure, a communication method is provided. The communication method is applied to a second network element. The above communication method includes: sending first information to a first network element, in which the first information includes at least one of: first parameter information, used to indicate a traffic parameter of a data flow of a first service; or first indication information, used to indicate supporting a dynamic change of a traffic parameter.

According to a third aspect of embodiments of the disclosure, a communication method is provided. The communication method is applied to a third network element. The above communication method includes: receiving second information sent by a first network element, in which the second information includes first parameter information, and the first parameter information indicates a traffic parameter of a data flow of a first service.

According to a fourth aspect of embodiments of the disclosure, a communication method is provided. The communication method is applied to a fourth network element. The above communication method includes: receiving fourth information sent by a third network element, in which the fourth information includes at least one of: first parameter information, used to indicate a traffic parameter of a data flow of a first service; or second parameter information, used for the fourth network element to perform quality of service (QoS) monitoring related to a traffic parameter.

According to a fifth aspect of embodiments of the disclosure, a communication method is provided. The communication method is applied to a fifth network element. The above communication method includes: sending a data flow of a first service to a fourth network element, in which a data packet corresponding to the data flow includes a parameter value of a traffic parameter of the first service.

According to a sixth aspect of embodiments of the disclosure, a communication method is provided. The communication method is applied to an access network device. The above communication method includes: receiving fifth information, in which the fifth information includes at least one of: first parameter information, used to indicate a traffic parameter of a data flow of a first service; or third information, used to indicate a measurement result obtained by QoS monitoring related to a traffic parameter.

According to a seventh aspect of embodiments of the disclosure, a communication method is provided. The communication method is applied to a core network. The core network includes a second network element and a third network element. The above communication method includes: a first network element sending second information to the third network element, in which the second information includes first parameter information, and the first parameter information indicates a traffic parameter of a data flow of a first service.

According to an eighth aspect of embodiments of the disclosure, a first network element is provided. The first network element includes: a transceiver module configured to receive first information sent by a second network element, in which the first information includes at least one of: first parameter information, used to indicate a traffic parameter of a data flow of a first service; or first indication information, used to indicate supporting a dynamic change of a traffic parameter.

According to a ninth aspect of embodiments of the disclosure, a second network element is provided. The second network element includes: a transceiver module configured to send first information to a first network element, in which the first information includes at least one of: first parameter information, used to indicate a traffic parameter of a data flow of a first service; or first indication information, used to indicate supporting a dynamic change of a traffic parameter.

According to a tenth aspect of embodiments of the disclosure, a third network element is provided. The third network element includes: a transceiver module configured to receive second information sent by a first network element, in which the second information includes first parameter information, and the first parameter information indicates a traffic parameter of a data flow of a first service.

According to an eleventh aspect of embodiments of the disclosure, a fourth network element is provided. The fourth network element includes: a transceiver module configured to receive fourth information sent by a third network element, in which the fourth information includes at least one of: first parameter information, used to indicate a traffic parameter of a data flow of a first service; or second parameter information, used for the fourth network element to perform QoS monitoring related to a traffic parameter.

According to a twelfth aspect of embodiments of the disclosure, a fifth network element is provided. The fifth network element includes: a transceiver module configured to send a data flow of a first service to a fourth network element, in which a data packet corresponding to the data flow includes a parameter value of a traffic parameter of the first service.

According to a thirteenth aspect of embodiments of the disclosure, an access network device is provided. The access network device includes: a transceiver module configured to receive fifth information, in which the fifth information includes at least one of: first parameter information, used to indicate a traffic parameter of a data flow of a first service; or third information, used to indicate a measurement result obtained by QoS monitoring related to a traffic parameter.

According to a fourteenth aspect of embodiments of the disclosure, a first network element is provided. The first network element includes: one or more processors, and a memory storing instructions. When the instructions executed by the first network element, the first network element is caused to implement the communication method according to the first aspect.

According to a fifteenth aspect of embodiments of the disclosure, a second network element is provided. The second network element includes: one or more processors, and a memory storing instructions. When the instructions are executed by the second network element, the second network element is caused to implement the communication method according to the second aspect.

According to a sixteenth aspect of embodiments of the disclosure, a third network element is provided. The third network element includes: one or more processors, and a memory storing instructions. When the instructions executed by the third network element, the third network element is caused to implement the communication method according to the third aspect.

According to a seventeenth aspect of embodiments of the disclosure, a fourth network element is provided. The fourth network element includes: one or more processors, and a memory storing instructions. When instructions are executed by the fourth network element, the fourth network element is caused to implement the communication method according to the fourth aspect.

According to an eighteenth aspect of embodiments of the disclosure, a fifth network element is provided. The fifth network element includes: one or more processors, and a memory storing instructions. When the instructions are executed by the fifth network element, the fifth network element are caused to implement the communication method according to the fifth aspect.

According to a nineteenth aspect of embodiments of the disclosure, an access network device is provided. The access network device includes: one or more processors, and a memory storing instructions. When the instructions are executed by the access network device, the access network device is caused to implement the communication method according to the sixth aspect.

According to a twentieth aspect of embodiments of the disclosure, a communication system is provided. The communication system includes: a first network element configured to implement the communication method according to the first aspect; a second network element configured to implement the communication method according to the second aspect; a third network element configured to implement the communication method according to the third aspect; a fourth network element configured to implement the communication method according to the fourth aspect; a fifth network element configured to implement the communication method according to the fifth aspect; and an access network device, configured to implement the communication method according to the sixth aspect.

According to a twenty-first aspect of embodiments of the disclosure, a storage medium is provided. The storage medium stores instructions. When the instructions are executed on a communication device, the communication device is caused to perform the communication method according to any one of the first to seventh aspects.

According to a twenty-second aspect of embodiments of the disclosure, a program product is provided. When the program product is executed by a communication device, the communication device is caused to perform the communication method according to any one of the first to seventh aspects.

According to a twenty-third aspect of embodiments of the disclosure, a computer program is provided. When the computer program is run on a computer, the computer is caused to perform the communication method according to any one of the first to seventh aspects.

According to a twenty-fourth aspect of embodiments of the disclosure, a chip or chip system is provided. The chip or chip system includes a processing circuit. The processing circuit is configured to perform the communication method according to any one of the first to seventh aspects.

With the embodiments of the disclosure, supporting QoS handling is provided for a dynamic change of a traffic pattern and/or traffic characteristic.

It should be understood that the above general description and the following detailed description are exemplary and explanatory only, and do not constitute a limitation on embodiments of the disclosure.

### BRIEF DESCRIPTION OF THE DRAWINGS

To more clearly illustrate the technical solution in embodiments of the disclosure, description is made below to accompanying drawings used for embodiments. The accompanying drawings below are only some embodiments of the disclosure and do not constitute a detailed limitation on the protection scope of the disclosure.
FIG. 1A is a schematic diagram illustrating an architecture of a communication system according to an embodiment of the disclosure.
FIG. 1B is a schematic diagram illustrating an architecture of one implementation of a communication system provided according to an embodiment of the disclosure.
FIG. 1C is a schematic diagram illustrating an architecture of another implementation of a communication system according to an embodiment of the disclosure.
FIG. 2A is an interaction schematic diagram illustrating a communication method according to an embodiment of the disclosure.
FIG. 2B is an interaction schematic diagram illustrating a communication method according to an embodiment of the disclosure.
FIG. 3A is a flow chart illustrating a communication method according to an embodiment of the disclosure.
FIG. 3B is a flow chart illustrating a communication method according to an embodiment of the disclosure.
FIG. 4A is a flow chart illustrating a communication method according to an embodiment of the disclosure.
FIG. 4B is a flow chart illustrating a communication method according to an embodiment of the disclosure.
FIG. 5A is a flow chart illustrating a communication method according to an embodiment of the disclosure.
FIG. 5B is a flow chart illustrating a communication method according to an embodiment of the disclosure.
FIG. 6A is a flow chart illustrating a communication method according to an embodiment of the disclosure.
FIG. 6B is a flow chart illustrating a communication method according to an embodiment of the disclosure.
FIG. 7 is a flow chart illustrating a communication method according to an embodiment of the disclosure.
FIG. 8A is an interaction schematic diagram illustrating a communication method according to an embodiment of the disclosure.
FIG. 8B is an interaction schematic diagram illustrating a communication method according to an embodiment of the disclosure.
FIG. 8C is an interaction schematic diagram illustrating a communication method according to an embodiment of the disclosure.
FIG. 8D is an interaction schematic diagram illustrating a communication method according to an embodiment of the disclosure.
FIG. 8E is an interaction schematic diagram illustrating a communication method according to an embodiment of the disclosure.
FIG. 9A is an interaction schematic diagram illustrating an exemplary implementation of a communication method according to an embodiment of the disclosure.
FIG. 9B is an interaction schematic interaction diagram illustrating an exemplary implementation of a communication method according to an embodiment of the disclosure.
FIG. 9C is an interaction schematic interaction diagram illustrating an exemplary implementation of a communication method according to an embodiment of the disclosure.
FIG. 10 is a block diagram illustrating a communication device according to an embodiment of the disclosure.
FIG. 11A is a block diagram illustrating a communication device according to an embodiment of the disclosure.
FIG. 11B is a block diagram illustrating a chip according to an embodiment of the disclosure.

### DETAILED DESCRIPTION

Embodiments of the disclosure provide a communication method, a network element, an access network device, a communication system, and a storage medium.

In a first aspect, embodiments of the disclosure provide a communication method. The communication method is applied to a first network element. The above communication method includes: receiving first information sent by a second network element, in which the first information includes at least one of: first parameter information, used to indicate a traffic parameter of a data flow of a first service; or first indication information, used to indicate supporting a dynamic change of a traffic parameter.

According to the above embodiments, supporting the dynamic change of the traffic parameter may be indicated by the first indication information, and a parameter in the dynamic change may also be indicated by the first parameter information. In this way, it is enabled that a 5G core network (5GC) may support quality of service (QoS) processing for the dynamic change of the traffic parameter of the data flow of the first service.

In combination with some embodiments of the first aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

According to the above embodiments, there may be multiple types of traffic parameters. The first indication information may indicate a traffic parameter that needs to support the dynamic change, and may realize targeted QoS handling under the dynamic change of the traffic parameter.

In combination with some embodiments of the first aspect, in some embodiments, the first information may also include at least one of: first requirement information, used to indicate a requirement of QoS monitoring related to the traffic parameter; or second requirement information, used to indicate a requirement related to an event subscription.

According to the above embodiments, the first requirement information may indicate the QoS monitoring related to the traffic parameter and/or a parameter related to the QoS monitoring. Furthermore, the second requirement information may indicate a subscription to a measurement result notification for the QoS monitoring. In this way, on one hand, it may be implemented that the QoS monitoring of the traffic parameter of the first service is performed to measure QoS information related to the traffic parameter; on the other hand, a measurement result may be reported, such that a parameter value of the traffic parameter may be updated based on the measurement result reported.

In combination with some embodiments of the first aspect, in some embodiments, the above method may also include: sending second information to a third network element, in which the second information includes the first parameter information.

In combination with some embodiments of the first aspect, in some embodiments, the above method may also include: determining a first rule based on the first information.

In combination with some embodiments of the first aspect, in some embodiments, the second information may further include first policy information, the first policy information is used for the QoS monitoring related to the traffic parameter, and the first policy information is determined based on the first information.

In the above embodiments, by sending the first policy information, performing the QoS monitoring related to the traffic parameter may be indicated.

In combination with some embodiments of the first aspect, in some embodiments, the above method may also include: receiving third information sent by the third network element, in which the third information indicates a measurement result obtained by the QoS monitoring related to the traffic parameter; and sending the third information to the second network element.

In the above embodiments, the first network element may forward the third information from the third network element to the second network element. In this way, the second network element may obtain the measurement result of the QoS monitoring based on the third network element, and realize a reporting of the measurement result and a timely updating of the traffic parameter.

In a second aspect, embodiments of the disclosure provide a communication method. The communication method is applied to a second network element. The above communication method includes: sending first information to a first network element, in which the first information includes at least one of: first parameter information, used to indicate a traffic parameter of a data flow of a first service; or first indication information, used to indicate supporting a dynamic change of a traffic parameter.

According to the above embodiments, supporting the dynamic change of the traffic parameter may be indicated by sending the first indication information, and a parameter of the dynamic change may also be indicated by sending the first parameter information. In this way, it is enabled that a 5GC may support QoS handling for the dynamic change of the traffic parameter of the data flow of the first service.

In combination with some embodiments of the second aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

In combination with some embodiments of the second aspect, in some embodiments, the first information may also include at least one of: first requirement information, used to indicate a requirement of QoS monitoring related to the traffic parameter; or second requirement information, used to indicate a requirement related to an event subscription.

In combination with some embodiments of the second aspect, in some embodiments, the above method may also include: receiving third information sent by the first network element, in which the third information indicates a measurement result obtained by the QoS monitoring related to the traffic parameter; and updating the first parameter information based on the measurement result.

In a third aspect, embodiments of the disclosure provide a communication method. The communication method is applied to a third network element. The above communication method includes: receiving second information sent by a first network element, in which the second information includes first parameter information, and the first parameter information indicates a traffic parameter of a data flow of a first service.

According to the above embodiments, a parameter of the dynamic change may be indicated by the first parameter information. In this way, it is enabled that a 5GC may support QoS handling for the dynamic change of the traffic parameter of the data flow of the first service.

In combination with some embodiments of the third aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

In combination with some embodiments of the third aspect, in some embodiments, the second information may also include first policy information, which is used for QoS monitoring related to the traffic parameter.

In combination with some embodiments of the third aspect, in some embodiments, the second information may be used to indicate a first rule; in which the above method may also include: determining a second rule based on the first rule, in which the second rule is used for the QoS handling on the data flow of the first service.

In combination with some embodiments of the third aspect, in some embodiments, the above method may also include: sending fourth information to a fourth network element, in which the fourth information includes at least one of: the first parameter information; or second parameter information, used for the fourth network element to implement the QoS monitoring related to the traffic parameter.

In combination with some embodiments of the third aspect, in some embodiments, the second parameter information may be determined based on at least one of: the first policy information, or configuration information of the third network element.

In combination with some embodiments of the third aspect, in some embodiments, the above method may also include: receiving third information sent by the fourth network element, in which the third information indicates a measurement result obtained by the QoS monitoring related to the traffic parameter; and sending the third information to the first network element.

In combination with some embodiments of the third aspect, in some embodiments, the above method may also include: sending fifth information to an access network device, in which the fifth information includes at least one of: the first parameter information; or the third information, used to indicate the measurement result obtained by the QoS monitoring related to the traffic parameter.

In combination with some embodiments of the third aspect, in some embodiments, the fifth information may be sent via a next generation application protocol (NGAP).

In a fourth aspect, embodiments of the disclosure provide a communication method. The communication method is applied to a fourth network element. The above communication method includes: receiving fourth information sent by a third network element, in which the fourth information includes at least one of: first parameter information, used to indicate a traffic parameter of a data flow of a first service; or second parameter information, used for the fourth network element to implement QoS monitoring related to a traffic parameter.

In combination with some embodiments of the fourth aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

In combination with some embodiments of the fourth aspect, in some embodiments, the fourth information may include the second parameter information; in which the above method may also include: performing the QoS monitoring related to the traffic parameter based on the second parameter information.

In combination with some embodiments of the fourth aspect, in some embodiments, the above method may also include at least one of: sending third information to the third network element on a control plane; sending third information to a fifth network element on a user plane; in which the third information indicates a measurement result obtained by the QoS monitoring related to the traffic parameter.

In combination with some embodiments of the fourth aspect, in some embodiments, the above method may also include: identifying the data flow of the first service based on the first parameter information, in which a data packet corresponding to the data flow includes a parameter value of the traffic parameter; and sending the data flow to an access network device.

In combination with some embodiments of the fourth aspect, in some embodiments, the data flow may be sent via a general packet radio service tunneling protocol-user plane (GTP-U) protocol.

In a fifth aspect, embodiments of the disclosure provide a communication method. The communication method is applied to a fifth network element. The above communication method includes: sending a data flow of a first service to a fourth network element, in which a data packet corresponding to the data flow includes a parameter value of a traffic parameter of the first service.

In combination with some embodiments of the fifth aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

In combination with some embodiments of the fifth aspect, in some embodiments, the above method may also include: receiving third information sent by the fourth network element, in which the third information indicates a measurement result obtained by QoS monitoring related to the traffic parameter.

In a sixth aspect, embodiments of the disclosure provide a communication method. The communication method is applied to an access network device. The above communication method includes: receiving fifth information sent by a third network element, in which the fifth information includes at least one of: first parameter information, used to indicate a traffic parameter of a data flow of a first service; or third information, used to indicate a measurement result obtained by QoS monitoring related to a traffic parameter.

In combination with some embodiments of the sixth aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

In combination with some embodiments of the sixth aspect, in some embodiments, the fifth information may be received via an NGAP.

In combination with some embodiments of the sixth aspect, in some embodiments, the above method may further include: receiving the data flow of the first service sent by a fourth network element, in which a data packet corresponding to the data flow includes a parameter value of the traffic parameter.

In combination with some embodiments of the sixth aspect, in some embodiments, the data flow may be received via a GTP-U protocol.

In a seventh aspect, embodiments of the disclosure provide a communication method. The communication method is performed by a core network. The core network includes a second network element and a third network element. The above method includes: sending, by a first network element, second information to the third network element, in which the second information includes first parameter information, and the first parameter information indicates a traffic parameter of a data flow of a first service.

In an eighth aspect, embodiments of the disclosure provide a first network element. The first network element includes: a transceiver module configured to receive first information sent by a second network element, in which the first information includes at least one of: first parameter information, used to indicate a traffic parameter of a data flow of a first service; or first indication information, used to indicate supporting a dynamic change of a traffic parameter.

In combination with some embodiments of the eighth aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

In combination with some embodiments of the eighth aspect, in some embodiments, the first information may also include at least one of: first requirement information, used to indicate a requirement of QoS monitoring related to the traffic parameter; or second requirement information, used to indicate a requirement related to an event subscription.

In combination with some embodiments of the eighth aspect, in some embodiments, the transceiver module may also be configured to: send second information to a third network element, in which the second information includes the first parameter information.

In combination with some embodiments of the eighth aspect, in some embodiments, the first network element may also include: a processing module, configured to determine a first rule based on the first information.

In combination with some embodiments of the eighth aspect, in some embodiments, the second information may also include first policy information, used for the QoS monitoring related to the traffic parameter, and the first policy information is determined based on the first information.

In combination with some embodiments of the eighth aspect, in some embodiments, the transceiver module may also be configured to: receive third information sent by the third network element, in which the third information indicates a measurement result obtained by the QoS monitoring related to the traffic parameter; or send the third information to the second network element.

In a ninth aspect, embodiments of the disclosure provide a second network element. The second network element includes: a transceiver module configured to send first information to a first network element, in which the first information includes at least one of: first parameter information, used to indicate a traffic parameter of a data flow of a first service; or first indication information, used to indicate supporting a dynamic change of a traffic parameter.

In combination with some embodiments of the ninth aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

In combination with some embodiments of the ninth aspect, in some embodiments, the first information may also include at least one of: first requirement information, used to indicate a requirement of QoS monitoring related to the traffic parameter; or second requirement information, used to indicate a requirement related to an event subscription.

In combination with some embodiments of the ninth aspect, in some embodiments, the transceiver module may also be configured to: receive third information sent by the first network element, in which the third information indicates a measurement result obtained by the QoS monitoring related to the traffic parameter; and update the first parameter information based on the measurement result.

In a tenth aspect, embodiments of the disclosure provide a third network element. The third network element includes: a transceiver module configured to receive second information sent by a first network element, in which the second information includes first parameter information, and the first parameter information indicates a traffic parameter of a data flow of a first service.

In combination with some embodiments of the tenth aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

In combination with some embodiments of the tenth aspect, in some embodiments, the second information may also include first policy information, used for QoS monitoring related to the traffic parameter.

In combination with some embodiments of the tenth aspect, in some embodiments, the second information may be used to indicate a first rule; in which the above third network element may also include: a processing module configured to determine a second rule based on the first rule, in which the second rule is used for QoS handling of the data flow of the first service.

In combination with some embodiments of the tenth aspect, in some embodiments, the transceiver module may also be configured to: send fourth information to a fourth network element, in which the fourth information includes at least one of: the first parameter information; or second parameter information, used for the fourth network element to perform the QoS monitoring related to the traffic parameter.

In combination with some embodiments of the tenth aspect, in some embodiments, the second parameter information is determined based on at least one of: the first policy information, or configuration information of the third network element.

In combination with some embodiments of the tenth aspect, in some embodiments, the transceiver module may also be configured to: receive third information sent by the fourth network element, in which the third information indicates a measurement result obtained by the QoS monitoring related to the traffic parameter; and send the third information to a first network element.

In combination with some embodiments of the tenth aspect, in some embodiments, the transceiver module may also be configured to: send fifth information to an access network device, in which the fifth information includes at least one of: the first parameter information; or the third information, used to indicate the measurement result obtained by the QoS monitoring related to the traffic parameter.

In combination with some embodiments of the tenth aspect, in some embodiments, the fifth information may be sent via an NGAP.

In an eleventh aspect, embodiments of the disclosure provide a fourth network element. The fourth network element includes: a transceiver module configured to receive fourth information sent by a third network element, in which the fourth information includes at least one of: first parameter information, used to indicate a traffic parameter of a data flow of a first service; or second parameter information, used for the fourth network element to perform QoS monitoring related to a traffic parameter.

In combination with some embodiments of the eleventh aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

In combination with some embodiments of the eleventh aspect, in some embodiments, the fourth information may include the second parameter information; in which the above fourth network element may also include: a processing module configured to: perform QoS monitoring related to the traffic parameter based on the second parameter information.

In combination with some embodiments of the eleventh aspect, in some embodiments, the transceiver module may also be configured to perform at least one of: sending third information to the third network element on a control plane; sending third information to a fifth network element on a user plane; in which the third information indicates a measurement result obtained by the QoS monitoring related to the traffic parameter.

In combination with some embodiments of the eleventh aspect, in some embodiments, the transceiver module may also be configured to: identify the data flow of the first service based on the first parameter information, in which a data packet corresponding to the data flow includes a parameter value of the traffic parameter; and send the data flow to the access network device.

In combination with some embodiments of the eleventh aspect, in some embodiments, the data flow may be sent via a GTP-U protocol.

In a twelfth aspect, embodiments of the disclosure provide a fifth network element. The above fifth network element includes: a transceiver module configured to send a data flow of a first service to a fourth network element, in which a data packet corresponding to the data flow includes a parameter value of a traffic parameter of the first service.

In combination with some embodiments of the twelfth aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

In combination with some embodiments of the twelfth aspect, in some embodiments, the transceiver module may also be configured to: receive third information sent by the fourth network element, in which the third information indicates a measurement result obtained by QoS monitoring related to the traffic parameter.

In a thirteenth aspect, embodiments of the disclosure provide an access network device. The above access network device includes: a transceiver module configured to receive fifth information sent by a third network element, in which the fifth information includes at least one of: first parameter information, used to indicate a traffic parameter of a data flow of a first service; or third information, used to indicate a measurement result obtained by QoS monitoring related to a traffic parameter.

In combination with some embodiments of the thirteenth aspect, in some embodiments, the traffic parameter may include at least one of: a maximum burst size; a maximum flow bit rate; a periodicity; an N6 jitter; a burst arrived time; an end of a burst; an inter burst gap; a codec type; a tethered device type and/or requirement; or a connection migration.

In combination with some embodiments of the thirteenth aspect, in some embodiments, the fifth information may be received via an NGAP.

In combination with some embodiments of the thirteenth aspect, in some embodiments, the transceiver module may also be configured to: receive the data flow of the first service sent by a fourth network element, in which a data packet corresponding to the data flow includes a parameter value of the traffic parameter.

In combination with some embodiments of the thirteenth aspect, in some embodiments, the data flow may be received via a GTP-U protocol.

In a fourteenth aspect, embodiments of the disclosure provide a first network element. The first network element includes: one or more processors, and a memory storing instructions. When the instructions are executed by the first network element, the first network element is caused to implement the communication method according to any one of the first aspect and its possible implementations.

In a fifteenth aspect, embodiments of the disclosure provide a second network element. The second network element includes: one or more processors, and a memory storing instructions. When the instructions are executed by the second network element, the second network element is caused to implement the communication method according to any one of the second aspect and its possible implementations.

In a sixteenth aspect, embodiments of the disclosure provide a third network element. The third network element includes: one or more processors, and a memory storing instructions. When the instructions are executed by the third network element, the third network element is caused to implement the communication method according to any one of the third aspect and its possible implementations.

In a seventeenth aspect, embodiments of the disclosure provide a fourth network element. The fourth network element includes: one or more processors, and a memory storing instructions. When the instructions are executed by the fourth network element the fourth network element is caused to implement the communication method according to any one of the fourth aspect and its possible implementations.

In an eighteenth aspect, embodiments of the disclosure provide a fifth network element. The fifth network element includes: one or more processors, and a memory storing instructions. When the instructions are executed by the fifth network element, the fifth network element is caused to implement the communication method according to any one of the fifth aspect and its possible implementations.

In a nineteenth aspect, embodiments of the disclosure provide an access network device. The access network device includes: one or more processors, and a memory storing instructions. When the instructions are executed by the access network device, the access network device is caused to implement the communication method according to any one of the sixth aspect and its possible implementations.

In a twentieth aspect, embodiments of the disclosure provide a communication system. The communication system includes: a first network element configured to implement the communication method according to any one of the first aspect and its possible implementations; a second network element configured to implement the communication method according to any one of the second aspect and its possible implementations; a third network element configured to implement the communication method according to any one of the third aspect and its possible implementations; a fourth network element configured to implement the communication method according to any one of the fourth aspect and its possible implementations; a fifth network element configured to implement the communication method according to any one of the fifth aspect and its possible implementations; and an access network device configured to implement the communication method according to any one of the sixth aspect and its possible implementations.

In a twenty-first aspect, embodiments of the disclosure provide a storage medium. The storage medium stores instructions. When the instructions are run on a communication device, the communication device is caused to perform the communication method according to any one of the first to seventh aspects and their possible implementations.

In a twenty-second aspect, embodiments of the disclosure provide a program product. When the program product is executed by a communication device, the communication device is caused to perform the communication method according to any one of the first to seventh aspects and their possible implementations.

In a twenty-third aspect, embodiments of the disclosure provide a computer program. When the computer program is run on a computer, the computer is caused to perform the communication method according to any one of the first to seventh aspects and their possible implementations.

In a twenty-fourth aspect, embodiments of the disclosure provide a chip or chip system. The chip or chip system includes a processing circuit. The processing circuit is configured to perform the communication method according to any one of the first to seventh aspects and their possible implementations.

It should be understood that all the first network element, second network element, third network element, fourth network element, fifth network element, access network device, communication system, storage medium, program product, computer program, chip, and chip system described above are configured to perform the communication method provided in embodiments of the disclosure. Therefore, for beneficial effects they may achieve, please refer to the beneficial effects in the corresponding method, which are not repeated here.

Embodiments of the disclosure provide a communication method, a network element, an access network device, a communication system, and a storage medium. In some embodiments, the terms such as communication method, information processing method, etc. may be used interchangeably, the terms such as network element and information processing apparatus, communication device, etc., may be used interchangeably, and the terms such as information processing system, communication system, etc., may be used interchangeably.

The embodiments of the disclosure are not exhaustive, but are only illustrative, and are not intended to be a detailed limitation on the protection scope of the disclosure. In the absence of contradiction, each step in a certain embodiment may be implemented as an independent embodiment, and each step may be arbitrarily combined. For example, a solution after removing some steps in a certain embodiment may also be implemented as an independent embodiment, and an order of the steps in a certain embodiment may be arbitrarily exchanged. In addition, alternative implementations in a certain embodiment may be arbitrarily combined. In addition, respective embodiments may be arbitrarily combined. For example, some or all steps of different embodiments may be arbitrarily combined. For another example, a certain embodiment may be arbitrarily combined with alternative implementations of other embodiments.

In various embodiments of the disclosure, unless otherwise specified or there is a logical conflict, the terms and/or descriptions between embodiments are consistent and reference to each other may be made, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In embodiments of the disclosure, "a plurality of" or "multiple" means two or more.

In some embodiments, the terms such as "at least one of", "one or more", "a plurality of", "multiple", etc. may be used interchangeably.

In some embodiments, the terms such as "at least one of A, B", "A and/or B", "in one case, A; in another case, B", "in response to one case, A; in response to another case, B", etc. may include the following technical solutions based on situations: in some embodiments, A (A is performed independently of B); in some embodiments, B (B is performed independently of A); in some embodiments, one is selected from A and B to be executed (A and B are selectively executed); in some embodiments, A and B (both A and B are performed). When there are more branches such as A, B, C, etc., the above is applicable.

In some embodiments, the descriptions such as "A or B", etc. may include the following technical solutions based on situations: in some embodiments, A (A is performed independently of B); in some embodiments, B (B is performed independently of A); in some embodiments, one is selected from A and B to be performed (A and B are selectively performed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity or content of the descriptive objects. For the statement of the descriptive objects, please refer to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", the "first information" and the "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus, etc. may be interpreted as physical or virtual, and their names are not limited to the names recorded in embodiments. In some case, the terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as a device ( such as, an access network device, a core network device, etc.,) included in a network.

In some embodiments, the terms such as "access network device (AN device)", "radio access network (RAN) device", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some embodiments, the access network device, the core network device, or the network device may be replaced with the terminal. For example, a structure where communication between access network devices, core network devices, or network devices and terminals is replaced with communication between multiple terminals (e.g., device-to-device (D2D), vehicle-to-everything (V2X), etc.) may also be applied to various embodiments of the disclosure. In this case, the terminal may also be configured to have all or some of the functions of the access network device. In addition, the terms such as "uplink" and "downlink" may be replaced with the terms (e.g., "sidelink") corresponding to the communication between terminals. For example, uplink channels or downlink channels may be replaced with side channels, and uplink links or downlink links may be replaced with side links.

In some embodiments, the terminal may be replaced with the access network device, the core network device, or the network device. In this case, the access network device, the core network device, or the network device may also be configured with all or some of the functions of the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the disclosure may be implemented as an independent embodiment. Any combination of elements, rows, or columns may also be implemented as an independent embodiment.

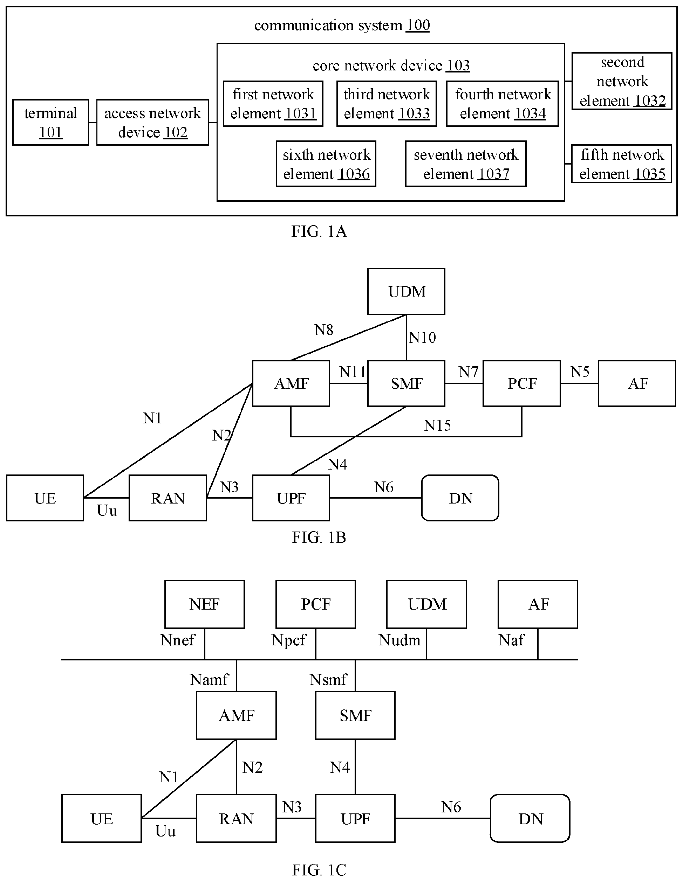

FIG. 1A is a schematic diagram illustrating an architecture of a communication system according to an embodiment of the disclosure. As illustrated in FIG. 1A, the communication system 100 includes a terminal 101, an access network device 102, and a core network device 103.

In some embodiments, the terminal 101 includes, such as, at least one of a mobile phone, a wearable device, an Internet of Things device, a car with a communication function, a smart car, and a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the access network device 102 is, such as, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, which is not limited herein.

In some embodiments, the technical solution of the disclosure may be applied to an Open RAN architecture. In this case, an interface between or within access network devices involved in embodiments of the disclosure may be transformed into an internal interface of Open RAN. The processes and information interactions between these internal interfaces may be implemented via software or program.

In some embodiments, the access network device 102 may be combined by a central unit (CU) and a distributed unit (DU). The CU may also be called a control unit. By employing a CU-DU structure, a protocol layer of the access network device may be separated. Some of protocol layer functions are centrally controlled by the CU, and the remaining part or all of protocol layer functions are distributed in the DU, which is centrally controlled by the CU, which is not limited herein.

In some embodiments, the core network device 103 may be a device, including a first network element 1031, a second network element 1032, a third network element 1033, a fourth network element 1034, a fifth network element 1035, a sixth network element 1036, a seventh network element 1037, etc., or may be multiple devices or device groups, each of which includes all or some of the first network element 1031, the second network element 1032, the third network element 1033, the fourth network element 1034, the fifth network element 1035, the sixth network element 1036, the seventh network element 1037, etc. The network elements may be virtual or physical. The core network includes, such as, at least one of an evolved packet core (EPC), a 5GCN, or a next generation core (NGC).

In some embodiments, the first network element 1031 may be, such as, a policy control function (PCF).

In some embodiments, the first network element 1031 may be configured to support a unified policy framework and provide a policy rule, and its name is not limited herein.

In some embodiments, the second network element 1032 may be, such as, an application function (AF).

In some embodiments, the second network element 1032 may be implemented by an application server and configured to provide an application service, and its name is not limited herein.

In some embodiments, the third network element 1033 may be, such as, a session management function (SMF).

In some embodiments, the third network element 1033 may be configured for functions such as session management, execution of a PCF-issued control policy, selection of UPF, and allocation of a UE internet protocol (IP) address, etc., and its name is not limited herein.

In some embodiments, the fourth network element 1034 may be, such as, a user plane function (UPF).

In some embodiments, the fourth network element 1034 may be configured to implement functions such as user plane (UP) data forwarding, session/flow-level-based billing statistics, bandwidth limiting, and UP QoS handling, etc., and its name is not limited herein.

In some embodiments, the fifth network element 1035 may be, such as, an application server (AS).

In some embodiments, the fifth network element 1035 may be configured to provide supporting for a user-subscribed service, and its name is not limited herein.

In some embodiments, the sixth network element 1036 may be, such as, an access and mobility management function (AMF).

In some embodiments, the sixth network element 1036 may be configured to perform mobility management, non-access stratum mobility management (NAS MM) signaling processing, NAS session management (SM) signaling routing, security anchor point and security context management, etc., and its name is not limited herein.

In some embodiments, the seventh network element 1037 may be, such as, a network exposure function (NEF).

In some embodiments, the seventh network element 1037 may be configured to ensure a security of an external application to a 3GPP network, and provide an external application with QoS customization capabilities, mobility state time subscription, AF request distribution, etc., and its name is not limited herein.

In some embodiments, the second network element 1032 may be located outside the core network device 103 or inside the core network device 103, which is not limited in embodiments of the disclosure.

In some embodiments, the fifth network element 1035 may be located outside the core network device 103 or inside the core network device 103, which is not limited in embodiments of the disclosure.

In some embodiments, the second network element 1032 and the fifth network element 1035 may be deployed centrally or independently, which is not limited in embodiments of the disclosure.

In some embodiments, the communication system 100 described above may be a 5G communication system. It should be noted that the communication system 100 may also be other communication systems, such as a 4G communication system or a 6G communication system, which is not limited in embodiments of the disclosure.

FIG. 1B and FIG. 1C illustrate an architecture of a communication system using the 5G communication system as an example. Here, a terminal 101 may be a UE, and an access network device 102 may be an RAN.

FIG. 1B is a schematic diagram illustrating an architecture of an implementation of a communication system according to an embodiment of the disclosure. As illustrated in FIG. 1B, an architecture of the 5G communication system is presented in a manner of reference points. N1 is a reference point between a UE and an AMF. N2 is a reference point between an RAN and the AMF. N3 is a reference point between the RAN and a UPF. N4 is a reference point between an SMF and the UPF. N5 is a reference point between a PCF and an AF. N6 is a reference point between the UPF and a data network (DN). N7 is a reference point between the SMF and the PCF. N11 is a reference point between the AMF and the SMF. N15 is a reference point between the SMF and the PCF. Uu is an interface between the UE and the RAN. It should be noted that an NEF is not illustrated in FIG. 1B. However, all network elements in the communication system may interact with the NEF.

FIG. 1C is a schematic diagram illustrating an architecture of another implementation of a communication system according to an embodiment of the disclosure. As illustrated in FIG. 1B, an architecture of the 5G communication system is presented in a manner of service-based interfaces. Namf is a service-based interface provided by an AMF. Nsmf is a service-based interface provided by an SMF. Nnef is a service-based interface provided by an NEF. Npcf is a service-based interface provided by a PCF. Naf is a service-based interface provided by an AF.

It may be understood that the communication system in embodiments of the disclosure is for more clearly illustrating the technical solutions in embodiments of the disclosure and does not constitute a limitation on the technical solutions in embodiments of the disclosure. Those skilled in the art may understand that the technical solutions in embodiments of the disclosure are also applicable to similar technical problems, with the evolution of system architectures and the emergence of new service scenarios.

The following embodiments of the disclosure may be applied to the communication system 100 or some of the subjects of the communication system 100 illustrated in FIG. 1A, but are not limited herein. The subjects illustrated in FIG. 1A are examples, and the communication system 100 may include all or some of the subjects in FIG. 1A, or may include other subjects than those illustrated in FIG. 1A. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the multiple systems may also be combined (such as, a combination of LTE or LTE-A and 5G, etc.) for application.

In some cases, mobile media services, online AR/VR and other XR services, online games, and video-based remote control of machines or drones are expected to contribute increasingly higher traffic to a communication network. XR services involve a multimodal data flow. Multimodal data are data of the same service/application input from the same device or different devices (including sensors), which may be output to one or more target device terminals. Data flows in the multimodal data often have a certain or even strong correlation, such as a synchronization of audio and video flows, or a synchronization of tactile and visual senses. There are some common features in data streams of such media services, among the data streams, and requirements of these service data streams (SDF) for a network transmission. Effective identification and utilization of these characteristics may be more helpful for a network and service transmission and control, as well as for service assurance and user experience.

In further cases, eXtended Reality (XRM) services and interactive media services require the communication system to comprehensively consider a QoS characteristic of the SDF. The QoS characteristic includes, for example, at least one of: whether parameters such as a delay-sensitive guaranteed bit rate (GBR) data stream, a guaranteed flow bit rate (GFBR), a packet delay budget (PDB), and a default maximum data burst volume (MDBV), etc. may be simultaneously met and coordinated consistently. Multiple XRM data streams of one terminal and XRM data streams of multiple terminals, and a consistency guarantee of QoS authorization and execution each other are involved.

In some embodiments, the SDF of the XRM service may support a PDU set-based processing, thus enhancing a QoS sensing and assurance of the SDF and improving a quality of experience (QoE) of a user.

In some embodiments, in a system such as 4G, 5G, 6G, V2X and the like, the AF may provide a PDU set QoS parameter and a protocol description. In some embodiments, the PDU set QoS parameter may include at least one of: a PDU set delay budget (PSDB), a PDU set error rate (PSER), or PDU set integrated handling information (PSIHI). Therefore, the SMF and the UPF may extend a packet header of PDUs in a PDU set of the SDF in combination with the protocol description and protocol header extension provided by the AF to carry PDU set information. The PDU information carried may be used by the access network for a QoS control based on the PDU set.

In some embodiments, the above PDU set information may include at least one of: a PDU set sequence number, a start or end PDU of the PDU set, a PDU sequence number within the PDU set, a number of PDUs within the PDU set, a PDU set importance, or a PDU set size. Here, the PDU set importance is used to characterize an importance of one PDU set relative to other PDU sets in the same QoS flow.

Understandably, the UPF performs SDF-to-QoS flow mapping based on a PDU and maps (or encapsulates) interrelated PDUs into the PDU set. Furthermore, the UPF may apply the same QoS policy to all PDU sets within the QoS flow. For example, the UPF may apply the same PDU set QoS parameter to all PDU sets within the QoS flow. In an example, the UPF may map an application flow to the QoS flow based on packet detection information in the PDU. Some PDUs in the QoS flow may be associated with media components (e.g., intra-coded frames and prediction frames), and the UPF classifies these PDUs into the PDU set and performs a corresponding control.

In some embodiments, for scenarios where a service such as XRM service or the like appears a dynamic change in a traffic characteristic or a traffic pattern, a 5GS needs to be able to implement a corresponding QoS handling.

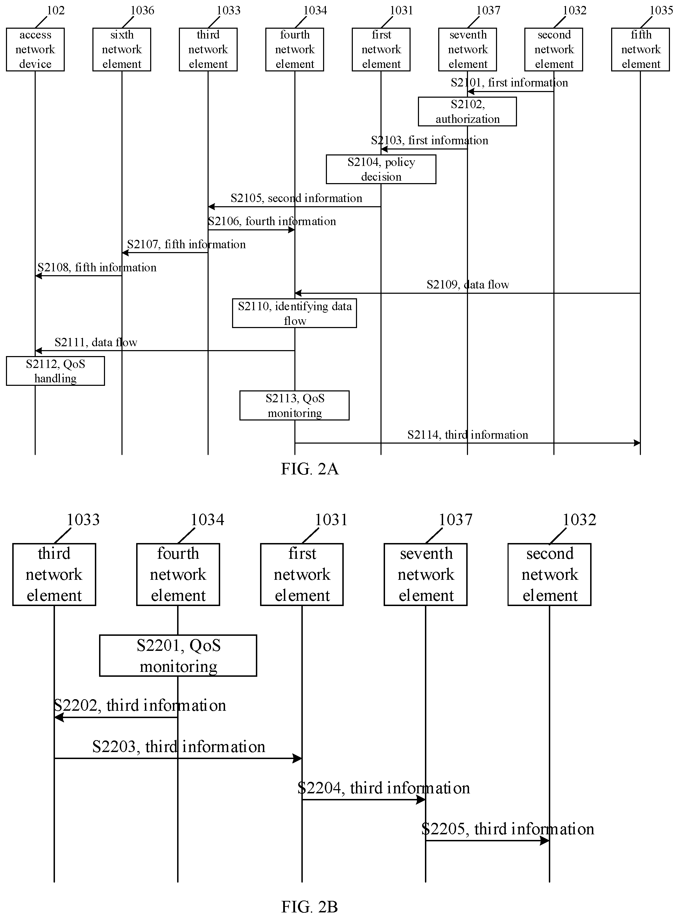

FIG. 2A is an interaction schematic diagram illustrating a communication method according to an embodiment of the disclosure. The communication method involved in embodiments of the disclosure may be applied to a communication system 100. As illustrated in FIG. 2A, the communication method of embodiments of the disclosure includes steps S2101 to S2112.

In step S2101, a second network element 1032 sends first information to a seventh network element 1037.

In some embodiments, the seventh network element 1037 may receive the first information.

In some embodiments, the first information may include at least one of: first parameter information, first indication information, first requirement information, or second requirement information.

In some embodiments, the first parameter information may be used to indicate a traffic parameter of a data flow of a first service.

In some embodiments, the traffic parameter may be a traffic pattern and/or a traffic characteristic. In some embodiments, the first parameter information may be used to indicate a traffic pattern and/or traffic characteristic that supports a dynamic change.

In some embodiments, the traffic parameter of the data flow of the first service may be changed. In some embodiments, the traffic parameter of the data flow of the first service may be dynamically changed. In an example, the traffic parameter may change with time. In an example, the traffic parameter may change by event triggering.

In some embodiments, traffic parameter may include at least one of: a maximum burst size, a maximum flow bit rate, a periodicity, an N6 jitter, a burst arrived time, an end of a burst, an inter burst gap, a codec type, a tethered device type and/or requirement, or a connection migration.

In some embodiments, the N6 jitter may be related to the periodicity.

In some embodiments, the first indication information may be used to indicate supporting the dynamic change of the traffic parameter. In some embodiments, the first indication information may be used to indicate that the second network element 1032 and/or a fifth network element 1035 support the dynamic change of the traffic parameter.

In some embodiments, the first requirement information may be used to indicate a requirement of QoS monitoring related to the traffic parameter.

In some embodiments, the first requirement information may be used to indicate performing the QoS monitoring related to the traffic parameter.

In some embodiments, the first requirement information may include parameter information of the QoS monitoring. In some embodiments, the parameter information of the QoS monitoring may include at least one of: a monitoring parameter or a parameter value corresponding to the monitoring parameter.

In some embodiments, the second requirement information may be used to indicate a requirement related to an event subscription.

In some embodiments, the second requirement information may be used to indicate performing the event subscription. In some embodiments, the second requirement information may be used to indicate performing the event subscription for the QoS monitoring. In an example, the second requirement information may be used to indicate performing an event subscription of a measurement result for the QoS monitoring.

In some embodiments, the second requirement information may include parameter information related to the event subscription. In some embodiments, the second requirement information may include at least one of: a subscription parameter or a parameter value corresponding to the subscription parameter.

In some embodiments, the first information may be carried in an AF request.

In some embodiments, the second network element 1032 may send an AF session resource request to the seventh network element 1037. The AF session resource request may carry the first information.

In some embodiments, the AF session resource request may be an Nnef_AFSessionwithQoS_Create request message.

In some embodiments, the AF session resource request may also include QoS requirement information corresponding to the data flow of the first service.

In some embodiments, the AF session resource request may also include at least one of: an identifier of the first service, an address and/or identifier of the terminal 101, an identifier of the second network element 1032, an application identifier of the first service, a flow description, a data network name (DNN), single network slice selection assistance information (S-NSSAI), or a QoS parameter.

In some embodiments, the identifier of the first service may be used to identify the data flow or data flow group of the first service. In some embodiments, the identifier of the first service may be a multimodal service identifier, which may be used to identify all data flows in a service group. In some embodiments, the data flow or data flow group of the first service may be a service data flow or a service data flow group.

In step S2102, the seventh network element 1037 performs an authorization.

In some embodiments, the seventh network element 1037 may authorize the AF request.

In some embodiments, the second network element 1032 may be an unauthorized network element, and the seventh network element 1037 may authorize the AF request from the second network element 1032.

In some embodiments, the second network element 1032 may be an authorized network element, and the seventh network element 1037 may not need to authorize the AF request from the second network element 1032. In other words, step S2102 may be omitted.

In step S2103, the seventh network element 1037 sends the first information to a first network element 1031.

In some embodiments, the first network element 1031 may receive the first information.

In some embodiments, the seventh network element 1037 may send the first information in different manners. In some embodiments, the seventh network element 1037 may determine a manner for sending the first information based on information and/or a parameter received from the second network element 1032.

In some embodiments, the manner of sending, by the seventh network element 1037, the first information may include: sending the first information via a time-sensitive communication and time synchronization function (TSCTSF) or sending the first information directly.

In some embodiments, the seventh network element 1037 may determine to send the first information to the first network element 1031 via the TCSTSF. In some embodiments, the seventh network element 1037 may send fourth information to the TSCTSF via a service-based interface Ntsftsf, and the TSCTSF may send the first information to the first network element 1031 via a service-based interface Npcf. In an example, the seventh network element 1037 may send the first information to the TSCTSF via an Ntsctsf_QoSandTSCAssistance_Create request message, and the TSCTSF may send the fourth information to the first network element 1031 via an Npcf_PolicyAuthorization_Create request message or an Npcf_PolicyAuthorization_Update request message.

In some embodiments, the seventh network element 1037 may determine to send the first information directly to the first network element 1031. In some embodiments, the seventh network element 1037 may send the first information to the first network element 1031 via the service-based interface Npcf. In an example, the seventh network element 1037 may send the first information to the first network element 1031 via the Npcf_PolicyAuthorization_Create request message.

In step S2104, the first network element 1031 makes a policy decision.

In some embodiments, the first network element 1031 may make the policy decision after receiving the first information.

In some embodiments, the first network element 1031 may determine the first rule via the policy decision.

In some embodiments, the first rule may be determined after considering the first information. In some embodiments, the first rule may be determined by considering at least one of the first parameter information, the first indication information, the first requirement information, or the second requirement information.

In some embodiments, the first rule may be determined based on the first information. In some embodiments, the first rule may be determined based on at least one of the first parameter information, the first indication information, the first requirement information, or the second requirement information.

In some embodiments, the first rule may be used to identify the data flow of the first service.

In some embodiments, the first rule may be used to map or route the data flow of the first service.

In some embodiments, the first rule may include a policy and charging control (PCC) rule.

In some embodiments, the first rule may be new. In some embodiments, the first network element 1031 may determine a new first rule based on the first information.

In some embodiments, the first rule may be updated. In some embodiments, the first network element 1031 may determine to update an existing first rule based on the first information.

In some embodiments, a name of the first rule is not limited, which may be, such as, a traffic mapping policy, a traffic mapping rule, or a traffic mapping relationship.

In some embodiments, the first network element 1031 may determine first policy information via the policy decision.

In some embodiments, the first policy information may be used for the QoS monitoring related to the traffic parameter.

In some embodiments, the first policy information may be used to indicate a policy and/or rule for the QoS monitoring related to the traffic parameter.

In some embodiments, the first policy information may be determined based on the first information. In some embodiments, the first policy information may be determined based on at least one of the first parameter information, the first indication information, the first requirement information, or the second requirement information.

In some embodiments, the first policy information may be included in the first rule or independent of the first rule.

In step S2105, the first network element 1031 sends second information to the third network element 1033.

In some embodiments, the third network element 1033 may receive the second information.

In some embodiments, the second information may be used to indicate the first rule.

In some embodiments, the second information may include at least one of: the first parameter information, the first rule, the first policy information, the first requirement information, or the second requirement information.

In some embodiments, the first parameter information may be included in the first rule.

In some embodiments, the first parameter information may be included in the first policy information.

In some embodiments, the first policy information may be included in the first rule.

In some embodiments, the first parameter information included in the second information may be used to indicate the traffic pattern and/or traffic characteristic that supports the dynamic change.

In some embodiments, the second information may be used to indicate a notification of a change in subscribing the traffic parameter.

In some embodiments, subscription to the notification of the change of the traffic parameter may be targeted at least one of: the third network element 1033, a fourth network element 1034, or an access network device 1035.

In some embodiments, an operation of the first network element 1031 subscribing to the notification of the change of the traffic parameter may be independent of step S2105.

In some embodiments, the second information may be sent to the third network element 1033 via the service-based interface Npcf.

In some embodiments, the first network element 1031 may initiate an SM Policy Association Modification process to send the second information.

In some embodiments, the second information may be carried in an Npcf_SMPolicyControl_UpdateNotify request message.

In step S2106, the third network element 1033 sends fourth information to the fourth network element 1034.

In some embodiments, the fourth network element 1034 may receive the fourth information.

In some embodiments, the fourth information may include at least one of: a second rule, the first parameter information, or the second parameter information.

In some embodiments, the traffic parameter indicated by the first parameter information in the fourth information received by the third network element 1033 may be the same as, partially the same as, or different from the traffic parameter indicated by the first parameter information carried in the first information in step S2101. In an example, the traffic parameter indicated by the first parameter information in the fourth information may include more parameters, fewer parameters, or completely different parameters compared to the traffic parameter indicated by the first parameter information carried in the first information. It is understandable that during a process of generating the first rule (e.g., the PCC rule) at the first network element 1031 and/or during a process of generating the second rule (e.g., a QoS rule) based on the first rule at the third network element 1033, the first parameter information may be modified, resulting in a change in the traffic parameter indicated by the first parameter information.

In some embodiments, the second rule may be used for QoS handling of the data flow of the first service.

In some embodiments, the second rule may include at least one of: the QoS rule, or a QoS set parameter.

In some embodiments, the second the rule may be determined by the third network element 1033 after considering the first parameter information.

In some embodiments, the second rule may be determined by the third network element 1033 based on the first parameter information.

In some embodiments, the second rule may be determined based on the first rule.

In some embodiments, the second rule may be determined based on the first parameter information and the first rule.

In some embodiments, the second parameter information may be used for the fourth network element 1034 to implement the QoS monitoring related to the traffic parameter.

In some embodiments, the second parameter information may be used to configure the fourth network element 1034 to perform a measurement of QoS information related to the traffic parameter.

In some embodiments, the second parameter information may be determined based on at least one of: the first policy information, or configuration information of the third network element 1033. In an example, the configuration information of the third network element 1033 may be a local configuration.

In some embodiments, the third network element 1033 may send the fourth information via an N4 session.

In some embodiments, the fourth information may be carried in an N4 Session Modification request message.

In step S2107, the third network element 1033 sends fifth information to a sixth network element 1036.

In some embodiments, the sixth network element 1036 may receive the fifth information.

In some embodiments, the fifth information may include at least one of: a QoS configuration (profile), the first parameter information, or third information.

In some embodiments, the third information may be used to indicate a measurement result obtained by the QoS monitoring related to the traffic parameter.

In some embodiments, the third network element 1033 may send the fifth information via the service-based interface Namf.

In some embodiments, the fifth information may be sent to the sixth network element 1036 via an Namf_Communication_N1N2MessageTransfer procedure.

In step S2108, the sixth network element 1036 sends the fifth information to the access network device 102.

In some embodiments, the access network device 102 may receive the fifth information.

In some embodiments, the sixth network element 1036 may send the fifth information via an N2 message.

In step S2109, the fifth network element 1035 sends a data flow to the fourth network element 1034.

In some embodiments, the fifth network element 1035 may send the data flow of the first service to the fourth network element 1034.

In some embodiments, the fourth network element 1034 may receive the data flows in a user plane.

In some embodiments, a data packet corresponding to the data flow of the first service may include a parameter value of the traffic parameter of the first service.

In some embodiments, the data packet corresponding to the data flow of the first service may include a parameter value of at least one of: a maximum burst size, a maximum flow bit rate, a periodicity, an N6 jitter, a burst arrived time, an end of a burst, an inter burst gap, a codec type, a tethered device type and/or requirement, or a connection migration.

In some embodiments, the parameter value of the traffic parameter may be carried in a header of the data packet.

In step S2110, the fourth network element 1034 identifies the data flow.

In some embodiments, the fourth network element 1034 may identify the data flow of the first service based on the fourth information.

In some embodiments, the fourth network element 1034 may identify the data flow of the first service based on the first parameter information and/or the second rule included in the fourth information. In some embodiments, in a case that the fourth information carries the first parameter information, the data flow of the first service may be identified at least based on the first parameter information.

In some embodiments, the fourth network element 1034 may identify the data flow of the first service based on an OAM operation and maintenance configuration, and/or an operator policy, and/or the local configuration. In some embodiments, in a case that the fourth information does not carry the first parameter information (i.e., the fourth network element 1034 does not receive any first parameter information), the data flow of the first service may be identified based on the OAM operation and maintenance configuration, and/or the operator policy, and/or the local configuration. In some embodiments, in a case that the fourth information does not carry the second rule (i.e., the fourth network element 1034 does not receive any second rule), the data flow of the first service may be identified based on the OAM operation and maintenance configuration, and/or the operator policy, and/or the local configuration.

In some embodiments, an identification of the data flow may be achieved via at least one of: matching of real-time transport protocol (RTP)/secure RTP (SRTP) headers and payloads; a new RTP extension header; information included in an N6 encapsulation header; a detection of the traffic characteristic; or a UPF implementation of a non-standardized mechanism.

In some embodiments, the data packet corresponding to the data flow of the first service identified by the fourth network element 1034 may include: a PDU set data packet and a non-PDU set data packet.

In step S2111, the fourth network element 1034 sends a data flow to the access network device 102.

In some embodiments, the fourth network element 1034 may send the data flow of the first service identified to the access network device 102.

In some embodiments, the fourth network element 1034 may send the data packet corresponding to the data flow of the first service identified to the access network device 102.

In some embodiments, the data flow of the first service may be sent to the access network device 102 using a GTP-U protocol.

In some embodiments, the fourth network element 1034 may carry a parameter value of the first parameter information in a GTP-U header.

In some embodiments, the fourth network element 1034 may carry relevant information of the PDU set in the GTP-U header.

In some embodiments, the relevant information of the PDU set may include at least one of: a PDU set sequence number, a start/end PDU of the PDU set, a PDU sequence number within the PDU set, a number of PDUs within the PDU set, a PDU set importance, a PDU set size, or an end of a data burst.

In some embodiments, the data flow sent by the fourth network element 1034 may not carry the parameter value of the first parameter information. In this case, the fourth network element 1034 may send the parameter value of the first parameter information to the access network device 102 via the third network element 1033 and the sixth network element 1036. At this time, the parameter value of the first parameter information may be sent to the access network device 102 via a control plane. In some embodiments, the parameter value of the first parameter information sent via the control plane may be statistical information for the parameter value of the first parameter information in the data flow.

In step S2112, the access network device 102 performs the QoS handling.

In some embodiments, the access network device 102 may perform the QoS handling based on the PDU set on the data flow after receiving the data flow from the fourth network element 1034.

In some embodiments, the QoS handling based on the PDU set may be implemented based on at least one of: the relevant information of the PDU set, or the parameter value of the first parameter information.

In step S2113, the fourth network element 1034 performs the QoS monitoring.

In some embodiments, the fourth network element 1034 may perform the QoS monitoring for a QoS flow.

In some embodiments, the fourth network element 1034 may perform the QoS monitoring based on the fourth information.

In some embodiments, the fourth network element 1034 may perform the QoS monitoring based on the first parameter information and/or the second parameter information.

In some embodiments, the QoS monitoring may include monitoring QoS information related to the traffic parameter indicated by the first parameter information.

In some embodiments, the QoS monitoring may include measuring a value of the QoS information related to the traffic parameter.

In some embodiments, the QoS monitoring may include comparing a value measured with a preset threshold to obtain a comparison result.

In some embodiments, the preset threshold may be specified by a protocol or configured via the first parameter information and/or the second parameter information.

In some embodiments, a measurement result of the QoS monitoring may include at least one of: a measurement value, or the comparison result.

In step S2114, the fourth network element 1034 sends the third information to the fifth network element 1035.

In some embodiments, the first network element 1031 may subscribe to a notification of the change in the traffic parameter from the fourth network element 1034.

In some embodiments, the first network element 1031 may subscribe to a notification of the change in the traffic parameter from the third network element 1033, and the third network element 1033 may subscribe to a notification of the change in the traffic parameter from the fourth network element 1034. In this way, the first network element 1031 may indirectly subscribe to a notification of the change in the traffic parameter from the fourth network element 1034.

In some embodiments, the first network element 1031 may subscribe to the access network device 102 for the notification of the change in the traffic parameter.

In some embodiments, subscription to the notification of the change in the traffic parameter may be achieved by sending the first requirement information. It is understood that the subscription to the notification of the change of the traffic parameter may also be achieved in other ways, which is not limited in embodiments of the disclosure.

In some embodiments, the third information may be sent in at least one of: periodic sending, or event-triggered sending.

In some embodiments, an event that triggers sending the third information may include at least one of: the comparison result indicating that the measurement value exceeds the preset threshold, or receiving trigger information for the third information.

In some embodiments, the fourth network element 1034 sends the third information to the fifth network element 1035 in the user plane.

In some embodiments, the third information may be used to indicate the measurement result obtained by the QoS monitoring related to the traffic parameter.

In some embodiments, the fourth network element 1034 may send the third information to the fifth network element 1035 via an N6 interface.

In some cases, at least some of steps S2101 to S2114 in embodiments may be combined to implement supporting the dynamic change of the traffic parameter of the first service. In some cases, at least some of steps S2101 to S2114 in embodiments may be combined to implement the QoS monitoring of the traffic parameter of the first service. In some cases, at least some of steps S2101 to S2114 in embodiments may be combined to implement a reporting of the measurement result of the QoS monitoring of the traffic parameter of the first service.

It should be noted that in embodiments of the disclosure, the traffic parameter changed dynamically may be the same as or different from the traffic parameter obtained by the QoS monitoring.

In some embodiments, the traffic parameter changed dynamically may be completely different from the traffic parameter obtained by the QoS monitoring. In this case, an implementation solution supporting the dynamic change in the traffic parameter of the first service may be independent of an implementation solution for the QoS monitoring and/or the reporting of the measurement result of the traffic parameter of the first service.

The communication methods involved in the embodiments of the disclosure may include at least one of steps S2101 to S2114. For example, step S2101 may be implemented as an independent embodiment. For example, step S2105 may be implemented as an independent embodiment. For example, step S2106 may be implemented as an independent embodiment. For example, step S2107 may be implemented as an independent embodiment. For example, step S2110 may be implemented as an independent embodiment. For example, step S2111 may be implemented as an independent embodiment. For example, step S2113 may be implemented as an independent embodiment. For example, step S2114 may be implemented as an independent embodiment. For example, a combination of steps S2101 and S2103 may be implemented as an independent embodiment. For example, a combination of steps S2107 and S2108 may be implemented as an independent embodiment. For example, a combination of steps S2110 and S2111 may be implemented as an independent embodiment. For example, a combination of steps S2113 and S2114 may be implemented as an independent embodiment. It should be noted that possible independent embodiments combined by one or more of steps S2101 to S2112 are not limited herein.

In some embodiments, at least two of steps S2101 to S2114 may be performed in an exchanged order or simultaneously. For example, steps S2106 and S2107 may be performed in an exchanged order or simultaneously.

In some embodiments, steps S2102 to S2114 are alternative, and one or more of these steps may be omitted or substituted in different embodiments.

In some embodiments, steps S2101 to S2104 and S2106 to S2114 are alternative, and one or more of these steps may be omitted or substituted in different embodiments.

In some embodiments, steps S2101 to S2105 and S2107 to S2114 are alternative, and one or more of these steps may be omitted or substituted in different embodiments.

In some embodiments, steps S2101 to S2106 and S2108 to S2114 are alternative, and one or more of these steps may be omitted or substituted in different embodiments.

In some embodiments, steps S2101 to S2109 and S2111 to S2114 are alternative, and one or more of these steps may be omitted or substituted in different embodiments.

In some embodiments, steps S2101 to S2112 and S2114 are alternative, and one or more of these steps may be omitted or substituted in different embodiments.

In some embodiments, steps S2101 to S2113 are alternative, and one or more of these steps may be omitted or substituted in different embodiments.

In some embodiments, please refer to other alternative implementations described before or after the specification corresponding to FIG. 2A.

FIG. 2B is an interaction schematic diagram illustrating a communication method according to an embodiment of the disclosure. The communication method involved in embodiments of the disclosure may be applied to a communication system 100. As illustrated in FIG. 2B, the communication method of embodiments of the disclosure includes steps S2201 to S2205.

In step S2201, a fourth network element 1034 performs QoS monitoring.

For an alternative implementation of step S2201, please refer to the alternative implementation of alternative implementation of step S2113 in FIG. 2A, and other related parts in the embodiments involved in FIG. 2A, which will not be repeated here.

In step S2202, the fourth network element 1034 sends third information to a third network element 1033.

In some embodiments, the third network element 1033 may receive the third information.

In some embodiments, the third information may be used to indicate a measurement result obtained by the QoS monitoring related to the traffic parameter.

In some embodiments, a first network element 1031 may subscribe to a notification of a change in the traffic parameter from the fourth network element 1034.

In some embodiments, the first network element 1031 may subscribe to a notification of the change of the traffic parameter from the third network element 1033, and the third network element 1033 may subscribe to a notification of the change of the traffic parameter from the fourth network element 1034. In this way, the first network element 1031 may indirectly subscribe to the notification of the change of the traffic parameter from the fourth network element 1034.

In some embodiments, the first network element 1031 may subscribe to a notification of the change of the traffic parameter from the access network device 102.

In some embodiments, subscription to the notification of the change of the traffic parameter may be implemented by sending first requirement information. It is understood that the subscription to the notification of the change of the traffic parameter may also be implemented in other ways, which is not limited in embodiments of the disclosure.

In some embodiments, the third information may be sent in at least one of: periodic sending, or event-triggered sending.

In some embodiments, an event that triggers sending of the third information may include at least one of: a comparison result indicating that a measurement value exceeds a preset threshold, or receiving trigger information for the third information.

In some embodiments, the fourth network element 1034 sends the third information to the third network element 1033 on a control plane.

In some embodiments, the fourth network element 1034 may send the third information to the third network element 1033 via an N4 interface. In some embodiments, the fourth network element 1034 may send the third information to the third network element 1033 via an N4 session.

In some embodiments, the third information may be sent via a service-based interface Nupf.

In some embodiments, the fourth network element 1034 may trigger an event exposure notification. In some embodiments, the fourth network element 1034 may send a Nupf_EventExposure_Notify message and carry the third information in the Nupf_EventExposure_Notify message.

In step S2203, the third network element 1033 sends the third information to the first network element 1031.

In some embodiments, the first network element 1031 may receive the third information.

In some embodiments, the third network element 1033 may send the third information from the fourth network element 1034 to the first network element 1031.

In some embodiments, the third network element 1033 may send the third information to the first network element 1031 via an N7 interface.

In step S2204, the first network element 1031 sends the third information to a seventh network element 1037.

In some embodiments, the seventh network element 1037 may receive the third information.

In some embodiments, the first network element 1031 may send the third information from the third network element 1033 to the seventh network element 1037.

In some embodiments, the seventh network element 1037 may receive the Nupf_EventExposure_Notify message. The third information may be carried in the Nupf_EventExposure_Notify message.

In step S2205, the seventh network element 1037 sends the third information to a second network element 1032.

In some embodiments, the second network element 1032 may receive the third information.

In some embodiments, the third information may be sent via a service-based interface Nnef.

In some embodiments, the seventh network element 1037 may send the Nnef_EventExposure_Notify message and carry the third information in the Nnef_EventExposure_Notify message.

The communication methods involved in the embodiments of the disclosure may include at least one of steps S2201 to S2205. For example, step S2201 may be implemented as an independent embodiment. For example, step S2202 may be implemented as an independent embodiment. For example, step S2205 may be implemented as an independent embodiment. It should be noted that possible independent embodiments combined by one or more of steps S2201 to S2205 are not limited herein.

In some embodiments, at least two of steps S2202, S2203, S2204, or S2205 may be performed in an exchanged order or simultaneously. For example, steps S2106 and S2107 may be performed in an exchanged order or simultaneously.

In some embodiments, steps S2201, S2203, S2204, and S2205 are alternative, and one or more of these steps may be omitted or substituted in different embodiments.

In some embodiments, steps S2201, S2202, S2203, and S2204 are alternative, and one or more of these steps may be omitted or substituted in different embodiments.

In some embodiments, reference may be made to other alternative implementations described before or after the specification corresponding to FIG. 2B.

In some embodiments, names are not limited to those recorded in the embodiments. The terms such as "information", "message", "signal", "signaling", "report", "configuration", "indication", "instruction", "command", "channel", "parameter", "domain", "field", "symbol", "symbol/code element", "codebook", "codeword", "codepoint", "bit", "data", "program", "chip", etc., may be used interchangeably.

In some embodiments, the terms such as "uplink", "physical uplink", etc. may be used interchangeably; terms such as "downlink", "physical downlink", etc. may be used interchangeably; and terms such as "side", "sidelink", "sidelink communication", "direct link", "direct communication", "direct link communication" etc. may be used interchangeably.

In some embodiments, the terms such as "radio", "wireless", "radio access network (RAN)", "access network (AN)", and "RAN-based" may be used interchangeably.

In some embodiments, the terms such as "moment", "point time", "time", and "time location", etc. may be used interchangeably, and the terms such as "duration," "segment", "time window", "window", and "time", etc. may be used interchangeably.

In some embodiments, the terms such as "acquiring", "obtaining", "getting", "receiving", "transmitting", "bidirectional transmission", "sending and/or receiving" may be used interchangeably, which may be interpreted as receiving from another entity, obtaining from a protocol, obtaining from a high layer, obtaining via processing by itself, autonomously implementing, and other meanings.

In some embodiments, the terms such as "sending", "transmitting", "reporting", "delivering", "transmitting", "bidirectional transmission", "sending and/or receiving" may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, determination or judgment may be made by a value (0 or 1) represented by 1 bit, or by a true-false value (boolean) represented by true or false, or by a comparison of numerical values (e.g., a comparison with a predetermined value), which is not limited herein.

In some embodiments, the terms such as "traffic", "flow", "stream", and "data flow", etc. may be used interchangeably.

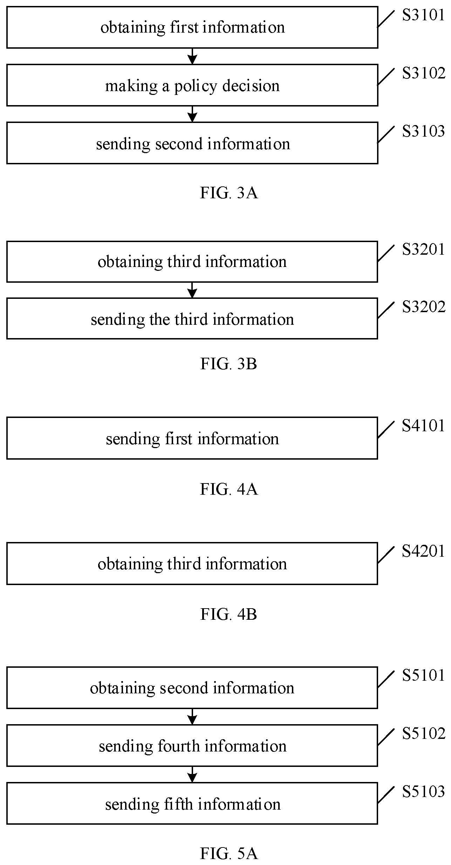

FIG. 3A is a flow chart illustrating a communication method according to an embodiment of the disclosure. Embodiments of the disclosure relate to the communication method. The communication method is performed by a first network element 1031. As illustrated in FIG. 3A, the above method includes steps S3101 to S3103.

In step S3101, first information is obtained.

For an alternative implementation of step S3101, please refer to the alternative implementation of step S2103 in FIG. 2A, and other related parts in the embodiments involved in FIG. 2A, which will not be repeated here.

In some embodiments, the first network element 1031 may receive the first information sent by a second network element 1032 or a seventh network element 1037 or other entities/devices, which is not limited herein.

In step S3102, a policy decision is made.

For an alternative implementation of step S3102, please refer to the alternative implementation of step S2104 in FIG. 2A, and other related parts in the embodiments involved in FIG. 2A, which will not be repeated here.

In some embodiments, a first rule may be determined based on the first information.

In some embodiments, first policy information may be determined based on the first information.

In step S3103, second information is sent.

For an alternative implementation of step S3103, please refer to the alternative implementation of step S2105 in FIG. 2A, and other related parts in the embodiments involved in FIG. 2A, which will not be repeated here.

In some embodiments, the first network element 1031 may send the second information to a third network element 1033 or other entities/devices, which is not limited herein.

The communication methods involved in the embodiments of the disclosure may include at least one of steps S3101 to S3103. For example, step S3101 may be implemented as an independent embodiment. For example, step S3103 may be implemented as an independent embodiment. For example, a combination of steps S3101 and S3103 may be implemented as an independent embodiment. It should be noted that a possible independent embodiment combined by one or more of steps S2101 to S2112 are not limited herein.

In some embodiments, steps S3102 and S3103 are alternative, and one or more of these steps may be omitted or substituted in different embodiments.

In some embodiments, steps S3101 and S3102 are alternative, and one or more of these steps may be omitted or substituted in different embodiments.

FIG. 3B is a flow chart illustrating a communication method according to an embodiment of the disclosure. Embodiments of the disclosure relate to the communication method. The communication method is performed by a first network element 1031. As illustrated in FIG. 3B, the above method includes steps S3201 to S3202.

In step S3201, third information is obtained.

For an alternative implementation of step S3201, please refer to the alternative implementation of step S2203 in FIG. 2B, and other related parts in the embodiments involved in FIG. 2B, which will not be repeated here.

In some embodiments, the first network element 1031 may receive the third information sent by a third network element 1033 or other entities/devices, which is not limited herein.

In step S3202, the third information is sent.

For an alternative implementation of step S3202, please refer to the alternative implementation of step S2204 in FIG. 2B, and other related parts in the embodiments involved in FIG. 2B, which will not be repeated here.

In some embodiments, the first network element 1031 may send the third information to a second network element 1033 or a seventh network element 1037 or other entities/devices, which is not limited herein.

The communication methods involved in the embodiments of the disclosure may include at least one of steps S3201 to S3202. For example, step S3201 may be implemented as an independent embodiment. For example, step S3202 may be implemented as an independent embodiment. For example, a combination of steps S3201 and S3202 may be implemented as an independent embodiment. It should be noted that a possible independent embodiment combined by one or more of steps S3201 to S3202 are not limited herein.

In some embodiments, step S3202 is alternative and may be omitted or replaced in different embodiments.

In some embodiments, step S3201 is alternative and may be omitted or replaced in different embodiments.

FIG. 4A is a flow chart illustrating a communication method according to an embodiment of the disclosure. Embodiments of the disclosure relate to the communication method. The communication method is performed by a second network element 1032. As illustrated in FIG. 4A, the above method includes step S4101.

In step S4101, first information is sent.

For an alternative implementation of step S4101, please refer to the alternative implementation of step S2101 in FIG. 2A, and other related parts in the embodiments involved in FIG. 2A, which will not be repeated here.

In some embodiments, the second network element 1032 may send the first information to a first network element 1031 or a seventh network element 1037 or other entities/devices, which is not limited herein.

FIG. 4B is a flow chart illustrating a communication method according to an embodiment of the disclosure. Embodiments of the disclosure relate to the communication method. The communication method is performed by a second network element 1032. As illustrated in FIG. 4B, the above method includes step S4201.

In step S4201, third information is obtained.

For an alternative implementation of step S4201, please refer to the alternative implementation of step S2205 in FIG. 2B, and other related parts in the embodiments involved in FIG. 2B, which will not be repeated here.

In some embodiments, the second network element 1032 may receive the third information sent by a first network element 1031 or a seventh network element 1037 or other entities/devices, which is not limited herein.

FIG. 5A is a flow chart illustrating a communication method according to an embodiment of the disclosure. Embodiments of the disclosure relate to the communication method. The communication method is performed by a third network element 1033. As illustrated in FIG. 5A, the above method includes steps S5101 to S5103.

In step S5101, second information is obtained.

For an alternative implementation of step S5101, please refer to the alternative implementation of step S2105 in FIG. 2A, and other related parts in the embodiments involved in FIG. 2A, which will not be repeated here.

In some embodiments, the third network element 1033 may receive the second information sent by a first network element 1031 or other entities/devices, which is not limited herein.

In step S5102, fourth information is sent.

For an alternative implementation of step S5102, please refer to the alternative implementation of step S2106 in FIG. 2A, and other related parts in the embodiments involved in FIG. 2A, which will not be repeated here.

In some embodiments, the third network element 1033 may send the fourth information to a fourth network element 1034 or other entities/devices, which is not limited herein.

In some embodiments, the fourth information may be used to identify a data flow of a first service.

In some embodiments, the fourth information may be used to implement QoS monitoring related to a traffic parameter.

In step S5103, fifth information is sent.

For an alternative implementation of step S5103, please refer to the alternative implementation of step S2107 in FIG. 2A, and other related parts in the embodiments involved in FIG. 2A, which will not be repeated here.

In some embodiments, the third network element 1033 may send the fifth information to a sixth network element 1036 or other entities/devices, which is not limited herein.

In some embodiments, the fifth information may be used to implement a QoS handling.

The communication methods involved in the embodiments of the disclosure may include at least one of steps S5101 to S5103. For example, step S5101 may be implemented as an independent embodiment. For example, step S5102 may be implemented as an independent embodiment. For example, step S5103 may be implemented as an independent embodiment. For example, a combination of steps S5101 and S5102 may be implemented as an independent embodiment. For example, a combination of steps S5101 and S5103 may be implemented as an independent embodiment. It should be noted that possible independent embodiments consisting of one or more of steps S5101 to S5103 are not limited herein.

In some embodiments, at least two of steps S5101 to S5103 may be performed in an exchanged order or simultaneously. For example, steps S5102 and S5103 may be performed in an exchanged order or simultaneously.

In some embodiments, steps S5102 and S5103 are alternative, and one or more of these steps may be omitted or substituted in different embodiments.

In some embodiments, steps S5101 and S5103 are alternative, and one or more of these steps may be omitted or substituted in different embodiments.

In some embodiments, steps S5101 and S5102 are alternative, and one or more of these steps may be omitted or substituted in different embodiments.

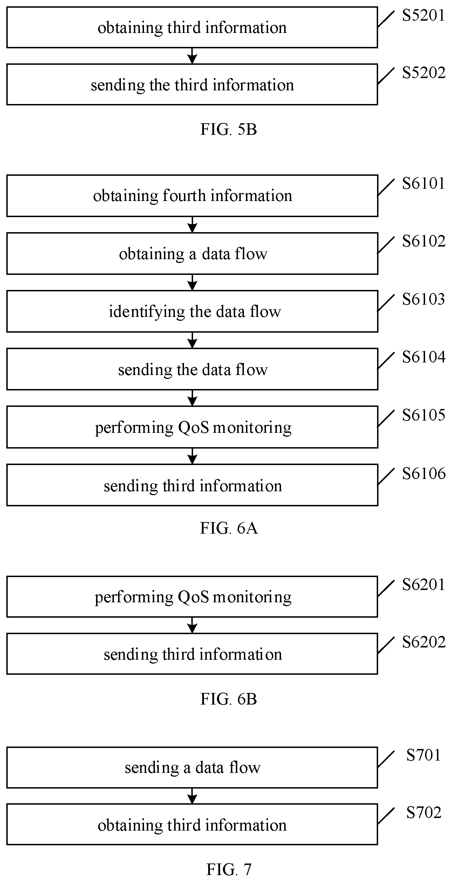

FIG. 5B is a flow chart illustrating a communication method according to an embodiment of the disclosure. Embodiments of the disclosure relate to the communication method. The communication method is performed by a third network element 1033. As illustrated in FIG. 5B, the above method includes steps S5201 to S5202.

In step S5201, third information is obtained.

For an alternative implementation of step S5201, please refer to the alternative implementation of step S2202 in FIG. 2B, and other related parts in the embodiments involved in FIG. 2B, which will not be repeated here.

In some embodiments, the third network element 1033 may receive the third information sent by a fourth network element 1034 or other entities/devices, which is not limited herein.

In step S5202, the third information is sent.

For an alternative implementation of step S5202, please refer to the alternative implementation of step S2203 in FIG. 2B, and other related parts in the embodiments involved in FIG. 2B, which will not be repeated here.

In some embodiments, the third network element 1033 may send the third information to a first network element 1031 or other entities/devices, which is not limited herein.

The communication methods involved in the embodiments of the disclosure may include at least one of steps S5201 to S5202. For example, step S5201 may be implemented as an independent embodiment. For example, step S5202 may be implemented as an independent embodiment. For example, a combination of steps S5201 and S5202 may be implemented as an independent embodiment. It should be noted that possible independent embodiments consisting of one or more of steps S5201 to S5202 are not limited herein.

In some embodiments, step S5202 is alternative and may be omitted or replaced in different embodiments.

In some embodiments, step S5201 is alternative and may be omitted or replaced in different embodiments.

FIG. 6A is a flow chart illustrating a communication method according to an embodiment of the disclosure. Embodiments of the disclosure relate to the communication method. The communication method is performed by a fourth network element 1034. As illustrated in FIG. 6A, the above method includes steps S6101 to S6106.

In step S6101, fourth information is obtained.

For an alternative implementation of step S6101, please refer to the alternative implementation of step S2106 in FIG. 2A, and other related parts in the embodiments involved in FIG. 2A, which will not be repeated here.

In some embodiments, the fourth network element 1034 may receive the fourth information sent by a third network element 1033 or other entities/devices, which is not limited herein.

In some embodiments, the fourth network element 1034 may obtain the fourth information specified in a protocol.

In some embodiments, the fourth network element 1034 may obtain the fourth information from an upper layer.

In some embodiments, the fourth network element 1034 may perform processing to obtain the fourth information.

In some embodiments, step S6101 may be omitted, and the fourth network element 1034 may autonomously implement functions involved in the fourth information, or the above functions are defaulted or set by default.

In step S6102, a data flow is obtained.

For an alternative implementation of step S6102, please refer to the alternative implementation of step S2109 in FIG. 2A, and other related parts in the embodiments involved in FIG. 2A, which will not be repeated here.

In some embodiments, the fourth network element 1034 may receive the data flows sent by a fifth network element 1035 or other entities/devices, which is not limited herein.

In step S6103, the data flow is identified.

For an alternative implementation of step S6103, please refer to the alternative implementation of step S2110 in FIG. 2A, and other related parts in the embodiments involved in FIG. 2A, which will not be repeated here.

In step S6104, the data flow is sent.

For an alternative implementation of step S6104, please refer to the alternative implementation of step S2111 in FIG. 2A, and other related parts in the embodiments involved in FIG. 2A, which will not be repeated here.

In some embodiments, the fourth network element 1034 may send the data flow to an access network device 102 or other entities/devices, which is not limited herein.

In step S6105, QoS monitoring is performed.

For an alternative implementation of step S6105, please refer to the alternative implementation of step S2113 in FIG. 2A, and other related parts in the embodiments involved in FIG. 2A, which will not be repeated here.

In step S6106, third information is sent.

For an alternative implementation of step S6106, please refer to the alternative implementation of step S2114 in FIG. 2A, and other related parts in the embodiments involved in FIG. 2A, which will not be repeated here.

In some embodiments, the fourth network element 1034 may send the third information to the fifth network element 1035 or other entities/devices, which is not limited herein.

The communication methods involved in the embodiments of the disclosure may include at least one of steps S6101 to S6106. For example, step S6101 may be implemented as an independent embodiment. For example, step S6103 may be implemented as an independent embodiment. For example, step S6104 may be implemented as an independent embodiment. For example, step S6106 may be implemented as an independent embodiment. For example, a combination of steps S6101 and S6103 may be implemented as an independent embodiment. For example, a combination of steps S6103 and S6104 may be implemented as an independent embodiment. For example, a combination of steps S6101 and S6106 may be implemented as an independent embodiment. It should be noted that a possible independent embodiment combined by one or more of steps S6101 to S6106 are not limited herein.

In some embodiments, at least two of steps S6101 to S6106 may be performed in an exchanged order or simultaneously. For example, steps S6104 and S6106 may be performed in an exchanged order or simultaneously.

In some embodiments, steps S6102, S6103, S6104, S6105, and S6106 are alternative, and one or more of these steps may be omitted or substituted in different embodiments.

In some embodiments, steps S6102, S6102, S6104, S6105, and S6106 are alternative, and one or more of these steps may be omitted or substituted in different embodiments.

In some embodiments, steps S6101, S6102, S6103, S6105, and S6106 are alternative, and one or more of these steps may be omitted or substituted in different embodiments.

In some embodiments, steps S6101, S6102, S6103, S6104, and S6105 are alternative, and one or more of these steps may be omitted or substituted in different embodiments.

FIG. 6B is a flow chart illustrating a communication method according to an embodiment of the disclosure. Embodiments of the disclosure relate to the communication method. The communication method is performed by a fourth network element 1034. As illustrated in FIG. 6B, the above method includes steps S6201 to S6202.

In step S6201, QoS monitoring is performed.

For an alternative implementation of step S6201, please refer to the alternative implementation of step S2201 in FIG. 2B, and other related parts in the embodiments involved in FIG. 2B, which will not be repeated here.

In step S6202, third information is sent.

For an alternative implementation of step S6202, please refer to the alternative implementation of step S2202 in FIG. 2B, and other related parts in the embodiments involved in FIG. 2B, which will not be repeated here.

In some embodiments, the fourth network element 1034 may send the third information to a third network element 1033 or other entities/devices, which is not limited herein.

The communication methods involved in the embodiments of the disclosure may include at least one of steps S6201 to S6102. For example, step S6201 may be implemented as an independent embodiment. For example, step S6202 may be implemented as an independent embodiment. It should be noted that a possible independent embodiment combined by one or more of steps S6201 to S6202 are not limited herein.

In some embodiments, step S6202 is alternative and may be omitted or replaced in different embodiments.

In some embodiments, step S6201 is alternative and may be omitted or replaced in different embodiments.

FIG. 7 is a flow chart illustrating a communication method according to an embodiment of the disclosure. Embodiments of the disclosure relate to the communication method. The communication method is performed by a fifth network element 1035. As illustrated in FIG. 7, the above method includes steps S701 to S702.

In step S701, a data flow is sent.

For an alternative implementation of step S701, please refer to the alternative implementation of step S2108 in FIG. 2A, and other related parts in the embodiments involved in FIG. 2A, which will not be repeated here.

In some embodiments, the fifth network element 1035 may send the data flow to a fourth network element 1034 or other entities/devices, which is not limited herein.

In step S702, third information is obtained.

For an alternative implementation of step S702, please refer to the alternative implementation of step S2114 in FIG. 2A, and other related parts in the embodiments involved in FIG. 2A, which will not be repeated here.

In some embodiments, the fifth network element 1035 may receive the third information sent by the fourth network element 1034 or other entities/devices, which is not limited herein.

The communication methods involved in the embodiments of the disclosure may include at least one of steps S701 to S702. For example, step S701 may be implemented as an independent embodiment. For example, step S702 may be implemented as an independent embodiment. It should be noted that a possible independent embodiment combined by one or more of steps S701 to S702 are not limited herein.

In some embodiments, step S701 is alternative and may be omitted or replaced in different embodiments.

In some embodiments, step S702 is alternative and may be omitted or replaced in different embodiments.

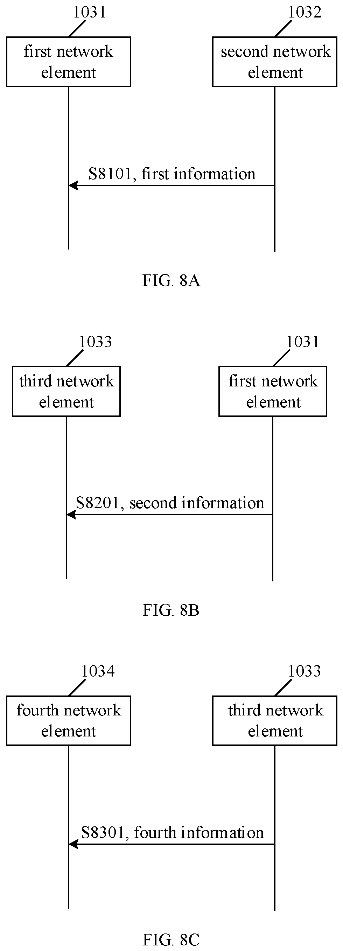

FIG. 8A is an interaction schematic diagram illustrating a communication method according to an embodiment of the disclosure. As illustrated in FIG. 8A, embodiments of the disclosure relate to the communication method. The above communication method includes step S8101.

In step S8101, a second network element 1032 sends first information to a first network element 1031.

For an alternative implementation of step S8101, please refer to the alternative implementations of steps S2101 and S2103 in FIG. 2A, and other related parts in the embodiments involved in FIG. 2A, which will not be repeated here.

FIG. 8B is an interaction schematic diagram illustrating a communication method according to an embodiment of the disclosure. As illustrated in FIG. 8A, embodiments of the disclosure relate to the communication method. The above communication method includes step S8201.

In step S8201, a first network element 1031 sends second information to a third network element 1033.

For an alternative implementation of step S8201, please refer to the alternative implementation of step S2105 in FIG. 2A, and other related parts in the embodiments involved in FIG. 2A, which will not be repeated here.

FIG. 8C is an interaction schematic diagram illustrating a communication method according to an embodiment of the disclosure. As illustrated in FIG. 8C, embodiments of the disclosure relate to the communication method. The above communication method includes step S8301.

In step S8301, a third network element 1033 sends fourth information to a fourth network element 1034.

For an alternative implementation of step S8301, please refer to the alternative implementation of step S2106 in FIG. 2A, and other related parts in the embodiments involved in FIG. 2A, which will not be repeated here.

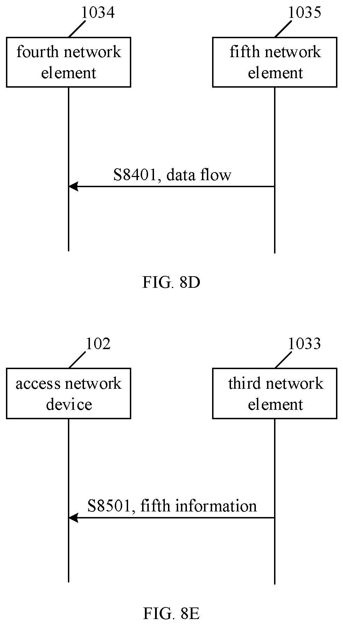

FIG. 8D is an interaction schematic diagram illustrating a communication method according to an embodiment of the disclosure. As illustrated in FIG. 8D, embodiments of the disclosure relate to the communication method. The above communication method includes step S8401.

In step S8401, a fifth network element 1035 sends a data flow to a fourth network element 1034.

For an alternative implementation of step S8401, please refer to the alternative implementation of step S2108 in FIG. 2A, and other related parts in the embodiments involved in FIG. 2A, which will not be repeated here.

FIG. 8E is an interaction schematic diagram illustrating a communication method according to an embodiment of the disclosure. As illustrated in FIG. 8E, embodiments of the disclosure relate to the communication method. The above communication method includes step S8401.

In step S8501, a third network element 1033 sends fifth information to an access network device 102.

For an alternative implementation of step S8501, please refer to the alternative implementations of steps S2107 and S2108 in FIG. 2A, and other related parts in the embodiments involved in FIG. 2A, which will not be repeated here.

In the following, detailed implementations of embodiments of the disclosure will be described by way of example.

In some embodiments, a traffic characteristic (a traffic pattern and/or traffic characteristic information) (i.e., a traffic parameter) supporting a dynamic change include one or more of: a maximum burst size; a maximum flow bit rate; a periodicity (and/or, an N6 jitter associated with the periodicity); a burst arrived time; an end of a burst; an inter burst gap; a codec type; a tethered device type and/or requirement; or a connection migration.

In some embodiments, an AF (i.e., a fifth network element) sends the traffic pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration) to a 5GC (NEF/PCF).

In some embodiments, during an AF QoS request/update procedure, the AF may provide the traffic pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration) to an NEF (i.e., a seventh network element)/PCF (i.e., a sixth network element).

In some embodiments, during the AF QoS request/update procedure, the AF may provide the 5GC (NEF/PCF) with an indication supporting the dynamic change of the traffic pattern and/or traffic characteristic information. In some embodiments, the AF may send a function indication. The function indication, along with the traffic pattern and/or traffic characteristic information, may be sent selectively or in combination.

In some embodiments, the AF may send a relevant monitoring requirement (i.e., first request information) and an event subscription requirement (i.e., second request information) to the PCF (i.e., the first network element).

In some embodiments, the PCF may determine a PCC rule by considering the pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration) provided by the AF. In some embodiments, the traffic pattern and/or traffic characteristic information may be used as one instance of input information for deciding the PCC rule.

In some embodiments, the PCF may send the pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration) received from the AF/NEF to the SMF (i.e., a third network element) via the PCC rule. In some embodiments, the PCF may send he pattern and/or traffic characteristic information to the SMF in the PCC rule to indicate which specific changes of the traffic pattern and/or traffic characteristic are supported.

In some embodiments, where monitoring and event subscription function are supported, and there is monitoring reporting or event change subscription, the 5GS may report a corresponding event or change exposure to the AF via the PCF or UPF. This function may be implemented by the AF, SMF, UPF, RAN, etc.

In some embodiments, the PCF may generate an authorized QoS monitoring policy (i.e., first policy information) (QoS monitoring related to the traffic pattern and/or traffic characteristic). In some embodiments, for a service data flow based on a request received from the AF, the PCF may subscribe to a notification (from the SMF and/or UPF and/or RAN) for a change event in the traffic pattern and/or traffic characteristic information.

In some embodiments, the PCF may include the authorized QoS monitoring policy (QoS monitoring related to the traffic pattern and/or traffic characteristic) and a notification subscription for the change event in the traffic pattern and/or traffic characteristic information in the PCC rule, and provide the PCC rule to the SMF.

In some embodiments, upon receiving the PCC rule, the SMF may determine a QoS rule and a QoS set parameter, considering the traffic pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration), thereby (e.g., via an N4 session) configuring and/or activating the QoS rule for the UPF.

In some embodiments, in a case that the SMF receives the authorized QoS monitoring policy (the traffic pattern and/or traffic characteristic related to the QoS monitoring) for the notification of the change event in the traffic pattern and/or traffic characteristic information, the SMF configures the UPF (i.e., a fourth network element) to perform a measurement (the traffic pattern and/or traffic characteristics related QoS information).

In some embodiments, the SMF configures the UPF to report a QoS monitoring result (i.e., a measurement result) for the QoS flow (the traffic pattern and/or traffic characteristics related QoS information) with a parameter determined through the SMF. The parameter may be determined by the SMF based on the authorized QoS monitoring policy received from the PCF and/or a local configuration.

In some embodiments, after receiving a report (i.e., third information), the SMF may forward the report with the QoS information related to the traffic pattern and/or traffic characteristic to the PCF to determine the PCC rule and expose the PCC rule to the AF in a case that the AF subscribes.

In some embodiments, considering the traffic pattern and/or traffic characteristic information, the UPF may identify a packet with a PDU set handling of XRM (i.e., a first service) SDFs and send the packet to an NG-RAN (i.e., an access network device) in an extended header (e.g., a GTP-U header).

In some embodiments, sending the traffic characteristic and/or traffic pattern changed includes the following two manners: by sending the traffic characteristic and/or traffic pattern changed to the RAN in a GTP-U enhancement header; or by sending the traffic characteristic and/or traffic pattern changed to the RAN via an NGAP. In the latter case, information sent by the SMF to the RAN may include information sent by the PCF and information reported by the UPF to the SMF after performing an identification and statistic. Understandably, one of these two manners may be selected or implemented together.

In some embodiments, the traffic pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration) may be provided to the UPF directly by the AS (i.e., the fifth element) or via the NEF.

In some embodiments, considering the traffic pattern and/or traffic characteristic information, the UPF may identify the packet with the PDU set handling of the XRM SDFs and send the packet to the NG-RAN in the extended header (e.g., the GTP-U header).

In some embodiments, considering the traffic pattern and/or traffic characteristic information, the UPF may identify the packet with the PDU set handling of the XRM SDF based on an OAM configuration and/or operator policy, and send the packet to the NG-RAN in the extended header (e.g., the GTP-U header).

In some embodiments, the SMF may be configured to perform the QoS (QoS information related to the traffic pattern and/or traffic characteristics) monitoring on the UPF for the QoS flow and to report the monitoring result.

In some embodiments, the SMF may subscribe to an event for the QoS flow and report a monitoring result.

In some embodiments, the UPF may perform the QoS (the QoS information related to the traffic pattern and/or traffic characteristics) monitoring.

In some embodiments, the UPF may report the monitoring results of the QoS information related to the traffic pattern and/or traffic characteristic to the SMF and PCF, and/or to a local NEF or AF.

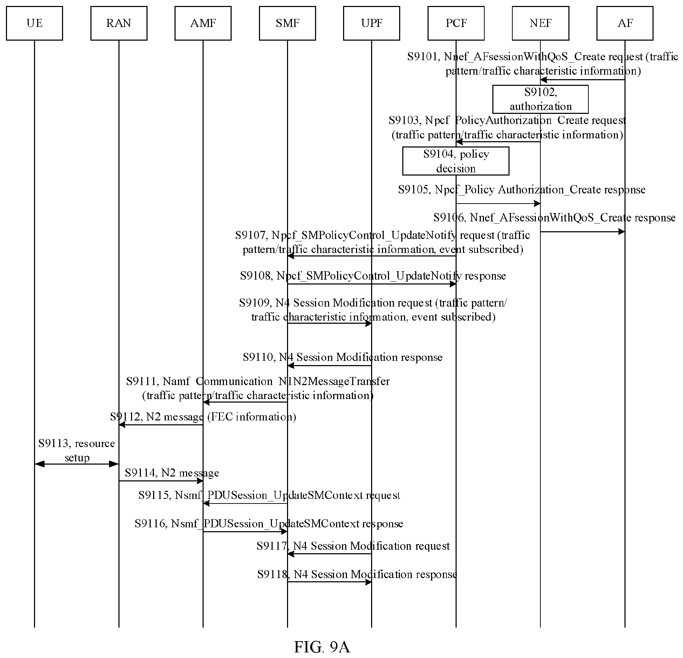

FIG. 9A is an interaction schematic diagram illustrating an exemplary implementation of a communication method according to an embodiment of the disclosure. As illustrated in FIG. 9A, the communication method includes steps S9101 to S9118.

In step S9101, an AF sends an AF session resource request, for example, establish an AF request via an Nnef_AFsessionWithQoS_Create request. The AF carries a QoS requirement for an XRM service and interactive media service data flow in a request message.

In some embodiments, the AF sends a traffic pattern and/or traffic characteristic information (including at least one of: a maximum burst size; a maximum flow bit rate; a periodicity (and/or, an N6 jitter associated with the periodicity); a burst arrived time; an end of a burst; an inter burst gap; a codec type; a tethered device type and/or requirement; or a connection migration) to a 5GC (NEF/PCF). The AF may provide the traffic pattern and/or traffic characteristic information to the NEF/PCF during an AF QoS request/update procedure.

In some embodiments, the AF may provide an indication supported by a dynamic change in the traffic pattern and/or traffic characteristic information to the 5GC (NEF/PCF) during the AF QoS request/update procedure. In some embodiments, the AF may send a function indication. The indication, along with the traffic pattern and/or traffic characteristic information, may be sent selectively or in combination.

In some embodiments, the AF may send a relevant monitoring requirement and an event subscription requirement to a PCF.

In some embodiments, XRM service information may be carried, identifying the XRM service data flow or data flow group (e.g., a multimodal service ID), a UE address/UE identifier, an AF identifier, an application ID, a flow description, a DNN, an S-NSSAI, a QoS parameter, and other corresponding information. The multimodal service ID here may be used to identify all flows in the XRM service group.

In step S9102, the NEF authorizes the AF request. In a case that the AF is an untrusted AF, the AF request is sent to the PCF via the NEF. (Alternatively, the NEF performs relevant mappings, including a mapping of identifying an XRM service (an AF service identifier) to the DNN and S-NSSAI, a mapping of an external application to a core network application identifier; and a mapping (such as SUPI) of an external UE identifier to a UE identifier within a core network based on UDM subscription information, and a mapping of external to internal XRM service group identifiers based on the UDM subscription information).

In step S9103, the NEF authorizes the AF request and determines whether to invoke a TSCTSF or directly contact the PCF based on a parameter provided by the AF. For these signaling steps, please refer to an AF session with required QoS procedure. The PCF receives attributes provided by the AF from the NEF or TSCTSF. The NEF triggers Npcf_PolicyAuthorization_Create, and sends the AF request to the PCF, carrying QoS requirement information for the PCF (i.e., a first core network device) to make a policy decision. The message carries a corresponding SDF pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration).

In step S9104, the PCF makes the policy decision. The PCF may determine that an updated or new policy information needs to be sent to the SMF.

In some embodiments, the PCF determines a PCC rule by considering the pattern and/or traffic characteristic information provided by the AF (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration). The traffic pattern and/or traffic characteristic information may be used as one instance of input information for deciding the PCC rule.

In some embodiments, the PCF may send the traffic pattern and/or traffic characteristic information received from the AF/NEF to the SMF via the PCC rule.

In some embodiments, where monitoring and event subscription function are supported, and there is monitoring reporting or event change subscription, the 5GS may report a corresponding event or change exposure to the AF via the PCF or UPF. Such function may be implemented by the AF, SMF, UPF, RAN, etc.

In some embodiments, the PCF may generate an authorized QoS monitoring policy (the traffic pattern and/or traffic characteristic related QoS monitoring). In some embodiments, for a service data flow based on a request received from the AF, the PCF may subscribe to a notification (from the SMF and/or UPF and/or RAN) for a change event in the traffic pattern and/or traffic characteristic information.

In some embodiments, the PCF may include the authorized QoS monitoring policy (the traffic pattern and/or traffic characteristic related QoS monitoring) and a notification subscription for a change event in the traffic pattern and/or traffic characteristic information in the PCC rule, and provide them to the SMF.

In step S9105, in response, the PCF sends an Npcf_Policy Authorization_Create response to the NEF.

In step S9106, the NEF sends an Nnef_AFsessionWithQoS_Create response message to the AF, and the Nnef_AFsessionWithQoS_Create response message carries a result to indicate whether the request is authorized.

In step S9107, the PCF initiates an SM Policy Association Modification request to the SMF, and the SM Policy Association Modification request carries the PCC rule (interburst time).

In some embodiments, upon receiving the PCC rule, considering the traffic pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration), the SMF may determine a QoS rule and a QoS set parameter, thereby (e.g., via an N4 session) configuring and/or activating the QoS rule for the UPF.

In some embodiments, in a case that the SMF receives the authorized QoS monitoring policy (the traffic pattern and/or traffic characteristic related QoS monitoring) for the notification of the change event in the traffic pattern and/or traffic characteristic information, the SMF configures the UPF to perform a measurement (the traffic pattern and/or traffic characteristics related QoS information).

In some embodiments, the SMF configures the UPF to report a QoS monitoring result (i.e., a measurement result) for a QoS flow (the traffic pattern and/or traffic characteristics related QoS information) with a parameter determined by the SMF. The parameter may be determined by the SMF based on the authorized QoS monitoring policy received from the PCF and/or a local configuration.

In some embodiments, after receiving a report, the SMF may forward the report (the traffic pattern and/or traffic characteristics related QoS information) to the PCF to determine the PCC rule and expose the PCC rule to the AF in a case that the AF subscribes.

In step S9108, the SMF replies an SM Policy Association Modification response to the PCF.

In step S9109, the SMF initiates an N4 Session Modification request to the UPF, and the N4 Session Modification request includes the traffic pattern and/or traffic characteristic information.

In step S9110, the UPF responds to the SMF.

In some embodiments, considering the traffic pattern and/or traffic characteristic information, the UPF may identify a packet with a PDU set handling of XRM SDFs and send the packet to an NG-RAN in an extended header (e.g., a GTP-U header).

In some embodiments, sending the traffic characteristic and/or traffic pattern changed includes the following two manners: by sending the traffic characteristic and/or traffic pattern changed to the RAN in a GTP-U enhancement header; or by sending the traffic characteristic and/or traffic pattern changed to the RAN via an NGAP. In the latter case, information sent by the SMF to the RAN may include information sent by the PCF and information reported by the UPF to the SMF after performing an identification and statistic. Understandably, one of these two manners may be selected or implemented together.

In some embodiments, the traffic pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration) may be provided to the UPF directly by the AS or via the NEF.

In some embodiments, considering the traffic pattern and/or traffic characteristic information, the UPF may identify the packet with the PDU set the XRM SDF and send them to the NG-RAN in the extended header (e.g., the GTP-U header).

In some embodiments, considering the traffic pattern and/or traffic characteristic information, the UPF may identify the packet of the PDU set handling of the XRM SDF based on an OAM configuration and/or operator policy, and send the packet to the NG-RAN in the extended header (e.g., the GTP-U header).

In some embodiments, the SMF may be configured to perform the QoS (QoS information related to the traffic pattern and/or traffic characteristics) monitoring on the UPF for the QoS flow and report the monitoring result.

In some embodiments, the SMF may subscribe to an event for the QoS flow and report a monitoring result.

In some embodiments, the UPF may perform the QoS (the traffic pattern and/or traffic characteristics related QoS information) monitoring.

In some embodiments, the UPF may report the monitoring results of the QoS information related to the traffic pattern and/or traffic characteristic to the SMF and PCF, and/or to a local NEF or AF.

In step S9111, for an SMF requested modification, the SMF invokes a Namf_Communication_N1N2MessageTransfer (N2 SM information (a PDU session ID, a QFI, a QoS Profile(s)), an N1 SM container)).

In step S9112, the AMF (i.e., a sixth network element) may send an N2 (the N2 SM information received from the SMF, an NAS message (the PDU session ID, the N1 SM container (a PDU session modification command))) message to the RAN.

In step S9114, the RAN may acknowledge an N2 PDU session request by sending an N2 PDU Session Ack message to the AMF.

In step S9115, the AMF forwards the N2 SM information from an access network to the SMF via an Nsmf_PDUSession_UpdateSMContext service operation.

In step S9116, the SMF responds with an Nsmf_PDUSession_UpdateSMContext response.

In steps S9117 and S9118, the SMF may update an N4 session of the UPF involved in a PDU session modification by sending the N4 Session Modification request to the UPF.

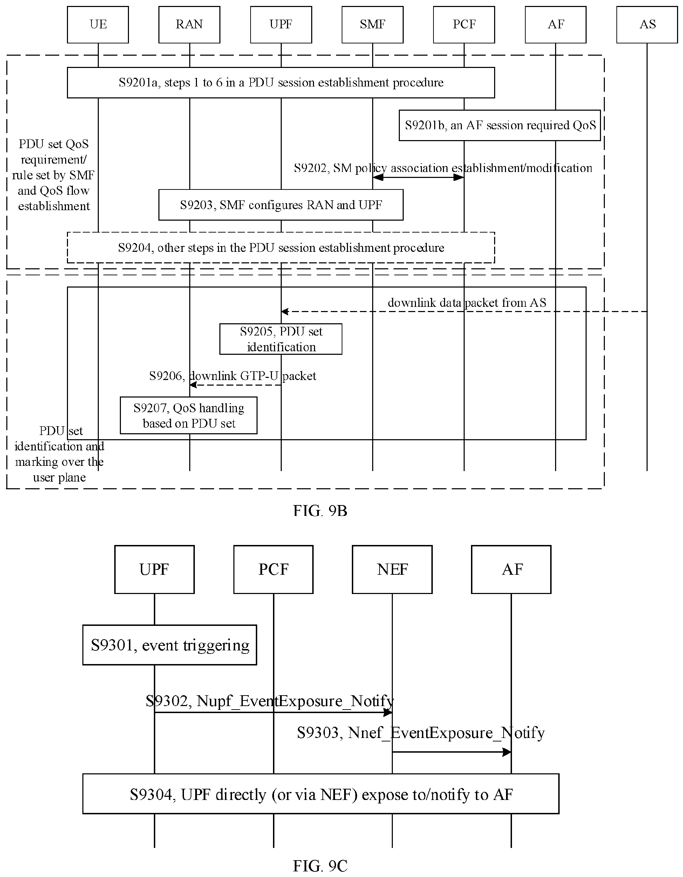

FIG. 9B is an interaction schematic diagram illustrating an exemplary implementation of a communication method according to an embodiment of the disclosure. As illustrated in FIG. 9B, the communication method includes steps S9201a to S9207.

In step S9201a, a PDU session establishment procedure is performed.

In step S9201b, an AF may send information (a QoS parameter of each PDU set within a QoS flow, and a parameter on frame identification) to a PCF via an Nnef_AFsessionWithQoS_Create request. Before a PDU session is established, the AF may also provide the information to a 5GS.

In some embodiments, the AF sends a traffic pattern and/or traffic characteristic information (including at least one of: a maximum burst size; a maximum flow bit rate; a periodicity (and/or, an N6 jitter associated with a periodicity); a burst arrived time; an end of a burst; an inter burst gap; a codec type; a tethered device type and/or requirement; or a connection migration) to a 5GC (NEF/PCF).

In some embodiments, the AF may provide the traffic pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration) to the NEF/PCF during an AF QoS request/update procedure.

In some embodiments, in some embodiments, the AF may provide an indication of the traffic pattern and/or traffic characteristic information changed dynamically supporting to the 5GC (NEF/PCF) during the AF QoS request/update procedure. In some embodiments, the AF may send a function indication. The indication, along with the traffic pattern and/or traffic characteristic information, may be sent selectively or in combination.

In some embodiments, the AF may send a relevant monitoring requirement and an event subscription requirement to a PCF.

In some embodiments, the AF may provide a protocol description and auxiliary information related to the PDU set. The auxiliary information related to the PDU set may include a QoS parameter for each QoS set within the QoS flow. The QoS parameter include at least one of: a PDU set processing indication, whether all PDUs are needed for a usage of the PDU set by an application layer, a PDU set delay budget, or a PDU set error rate (PSER). In some embodiments, the PDU set handling indication may be used to indicate whether PDU set-based handling should be activated to a flow. This indication may be implicitly indicated by other PDU set relevant information provided by the AF.

In step S9202, the PCF generates an appropriate PCC rule. The PCC rule may include a QoS parameter related to the PDU set. The PCF may send the PCC rule to an SMF.

In some embodiments, the PCF may determine the PCC rule by considering the traffic pattern and/or traffic characteristic information provided by the AF (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration). In some embodiments, the traffic pattern and/or traffic characteristic information may be used as one instance of input information for deciding the PCC rule.

In some embodiments, where monitoring and event subscription function are supported, and there is monitoring reporting or event change subscription, the 5GS may report a corresponding event or change exposure to the AF via the PCF or UPF. This function may be implemented by the AF, SMF, UPF, RAN, etc.

In some embodiments, the PCF may generate an authorized QoS monitoring policy (a QoS monitoring related to the traffic pattern and/or traffic characteristic). In some embodiments, for a service data flow based on a request received from the AF, the PCF may subscribe to a notification (from the SMF and/or UPF and/or RAN) for a change event in the traffic pattern and/or traffic characteristic information.

In some embodiments, the PCF may include the authorized QoS monitoring policy (the QoS monitoring related to the traffic pattern and/or traffic characteristic) and a notification subscription for a change event in the traffic pattern and/or traffic characteristic information in the PCC rule, and provide them to the SMF.

In some embodiments, the QoS parameter related to the PDU set may be new QoS parameter for QoS handling based on the PDU set in the 5GS, and may include at least one of: whether all PDUs are needed for the usage of the PDU set by the application layer, the PDU set delay budget, the PSER, or whether to drop the PDU set in a case that a PDU set delay budget is exceeded.

In some embodiments, step S9202 may be completed via some steps in a PDU session establishment procedure or a PDU session modification procedure.

In some embodiments, step S9202 may be triggered by step S9201b, and the PCF may consider information provided by the AF to generate the PCC rule.

In step S9203, the SMF generates a QoS profile and an N4 rule based on the PCC rule from the PCF. The SMF sends the N4 rule to the UPF and sends the QoS profile to the RAN via the AMF.

In some embodiments, upon receiving the PCC rule, considering the traffic pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration), the SMF may determine a QoS rule and a QoS set parameter, thus (e.g., via an N4 session) configuring and/or activating the QoS rule for the UPF.

In some embodiments, in a case that the SMF receives the authorized QoS monitoring policy (the traffic pattern and/or traffic characteristic related QoS monitoring) for the notification of the change event in the traffic pattern and/or traffic characteristic information, the SMF configures the UPF to perform a measurement (the traffic pattern and/or traffic characteristics related QoS information).

In some embodiments, the SMF configures the UPF to report a QoS monitoring result for the QoS flow (the traffic pattern and/or traffic characteristics related QoS information) with a parameter determined by the SMF. The parameter may be determined by the SMF based on the authorized QoS monitoring policy received from the PCF and/or a local configuration.

In some embodiments, after receiving a report, the SMF may forward the report (the traffic pattern and/or traffic characteristics related QoS information) to the PCF to determine a PCC rule and expose the PCC rule to the AF in a case that the AF subscribes.

In some embodiments, the protocol description and the auxiliary information related to the PDU set may be sent to the SMF as part of the PCC rule. The SMF may send the protocol description and the auxiliary information related to the PDU set as part of the QoS profile to an NG-RAN via the AMF.

In some embodiments, step S9203 may be completed via some steps in the PDU session establishment procedure or the PDU session modification procedure.

In step S9204, remaining steps in the PDU session establishment procedure and the PDU session modification procedure are performed.

In step S9205, the UPF identifies relevant information based on the N4 rule or local configuration received and performs the QoS handling based on the PDU set based on an N4 rule indication.

In some embodiments, considering the traffic pattern and/or traffic characteristic information, the UPF may identify a packet with a PDU set handling of XRM SDFs and send the packet to the NG-RAN in an extended header (e.g., a GTP-U header).

In some embodiments, sending the traffic characteristic and/or traffic pattern changed includes the following two manners: by sending the traffic characteristic and/or traffic pattern change to the RAN in a GTP-U enhancement header; or by sending the traffic characteristic and/or traffic pattern change to the RAN via an NGAP. In the latter case, information sent by the SMF to the RAN may include information sent by the PCF and information reported by the UPF to the SMF after performing an identification and statistic. Understandably, one of these two manners may be selected or implemented together.

In some embodiments, the traffic pattern and/or traffic characteristic information (including at least one of: the maximum burst size; the maximum flow bit rate; the periodicity (and/or, the N6 jitter associated with the periodicity); the burst arrived time; the end of the burst; the inter burst gap; the codec type; the tethered device type and/or requirement; or the connection migration) may be provided to the UPF directly by the AS or via the NEF.

In some embodiments, considering the traffic pattern and/or traffic characteristic information, the UPF may identify the packet of the PDU set using the XRM SDF and send them to the NG-RAN in the extended header (e.g., the GTP-U header).

In some embodiments, considering the traffic pattern and/or traffic characteristic information, the UPF may identify the packet with the PDU set handling of the XRM SDFs based on an OAM configuration and/or operator policy, and send the packet to the NG-RAN in the extended header (e.g., the GTP-U header).

In some embodiments, the SMF may be configured to perform the QoS (the QoS information related to the traffic pattern and/or traffic characteristic) monitoring on the UPF for the QoS flow and report the monitoring result.

In some embodiments, the SMF may subscribe to an event for the QoS flow and report a monitoring result.

In some embodiments, the UPF may perform the QoS monitoring (the QoS information related to the traffic pattern and/or traffic characteristic).

In some embodiments, the UPF may report the monitoring results of the QoS information related to the traffic pattern and/or traffic characteristic to the SMF and PCF, and/or to a local NEF or AF.

In some embodiments, the UPF may detect the dynamic change of the traffic pattern and/or traffic characteristic of a target SDF. In some embodiments, the UPF may detect a dynamic change of a traffic parameter and/or traffic feature of the target SDF. The UPF may identify a traffic parameter and/or traffic feature of an SDF, and a corresponding parameter value. In some embodiments, the UPF may add the traffic parameter and/or traffic feature changed and the corresponding parameter value to the GTP-U header, and send the GTP-U header to the RAN.

In some embodiments, the PDU set information in the extension header may include at least one of: a PDU set sequence number, a start or end PDU of the PDU set, a PDU sequence number within the PDU set, a number of PDUs within the PDU set, a PDU set importance, a PDU set size, or an end of a data burst.

In some embodiments, the UPF may identify relevant information by at least one of: matching of RTP/SRTP header and payload; a new RTP extension header; information included provided by an N6 encapsulation header; a detection based on the traffic characteristic; or a non-standardized mechanism UPF implementation.

In step S9206, the UPF sends the PDU set information to the RAN. The UPF sends the above PDU set relevant information to the RAN. The UPF may add the PDU set relevant information to the GTP-U header.

In step S9207, the RAN may perform the QoS handling based on the PDU set based on the PDU set relevant information received.

FIG. 9C is an interaction schematic diagram illustrating an exemplary implementation of a communication method according to an embodiment of the disclosure. As illustrated in FIG. 9C, the communication method includes steps S9301 to S9304.

In step S9301, a report may be triggered in a case that an event is detected or an event is reached (e.g., a threshold is reached, a periodic timer times out, or an event is triggered). A UPF may trigger a Nupf_EventExposure_Notify message to report measurement information, based on a subscription.

In step S9302, the UPF sends a Nupf_EventExposure_Notify message to an NEF, and the Nupf_EventExposure_Notify message carries a measurement result of monitoring information.

In step S9303, the NEF sends a Nnef_Nnef_EventExposure_Notify message to an AF, and the Nnef_Nnef_EventExposure_Notify message carries the measurement result of the monitoring information.

In step S9304, alternatively, the report may not be provided to the AF by a PCF, but the report may be exposed to/notified to the AS directly by the UPF or via the NEF.

In embodiments of the disclosure, some or all of steps and their alternative implementations may be arbitrarily combined with some or all of steps in other embodiments, and may also be arbitrarily combined with alternative implementations of other embodiments.

Embodiments of the disclosure also provides a communication device for implementing any one of the above methods. For example, embodiments of the disclosure also provide another communication device, including units or modules for implementing steps performed by the network device (the network element, the access network device) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of a processor calling software. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Alternatively, the units or modules in the apparatus may be implemented in the form of a hardware circuit. Some or all of the functions of the units or modules may be implemented via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large amount of logic gate circuits, and connection relationships among the logic gate circuits are configured by configuration files to implement the functions of some or all of the units or modules. All units or modules of the above apparatus may be fully implemented in the form of the processor calling the software, or fully implemented in the form of the hardware circuit, or partially implemented in the form of the processor calling the software and the remaining part implemented in the form of the hardware circuit.

In embodiments of the disclosure, the processor is a circuit with a signal processing capability. In an implementation, the processor may be a circuit with a capability of reading and running instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, such as, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

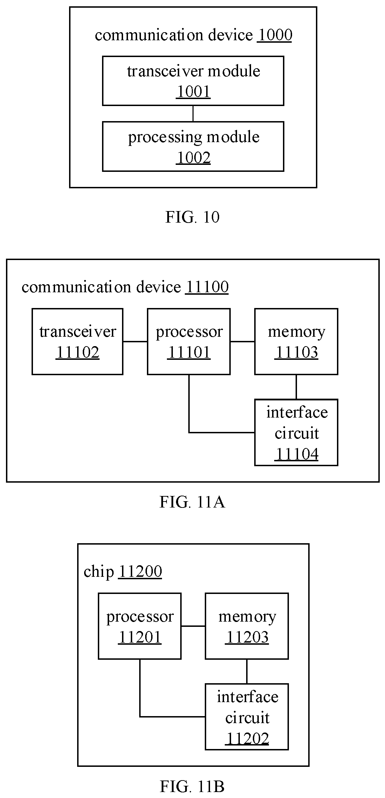

FIG. 10 is a block diagram illustrating a communication device according to an embodiment of the disclosure. As illustrated in FIG. 10, the communication device 1000 may include at least one of: a transceiver module 1001 or a processing module 1002.

In some embodiments, the communication device 1000 may be a first network element 1031. In some embodiments, the transceiver module 1001 may be configured to receive first information sent by a second network element, in which the first information includes at least one of: first parameter information, used to indicate a traffic parameter of a data flow of a first service; or first indication information, used to indicate supporting a dynamic change of a traffic parameter. Alternatively, the transceiver module 1001 may be configured to perform at least one of the communication steps such as sending and/or receiving (e.g., steps S2103, S2105, S2203, S2204) performed by the first network element 1031 in any one of the above methods, which will not be repeated here. Alternatively, the processing module 1002 may be configured to perform at least one of other steps (e.g., step S2104) other than the communication steps such as sending and/or receiving performed by the first network element 1031 in any one of the above methods, which will not be repeated here.

In some embodiments, the communication device 1000 may be a second network element 1032. In some embodiments, the transceiver module 1001 may be configured to send first information to a first network element, in which the first information includes at least one of: first parameter information, used to indicate a traffic parameter of a data flow of a first service; or first indication information, used to indicate supporting a dynamic change of a traffic parameter. Alternatively, the transceiver module 1001 may be configured to perform at least one of the communication steps such as sending and/or receiving (e.g., steps S2101, S2205) performed by the second network element 1032 in any one of the above methods, which will not be repeated here.

In some embodiments, the communication device 1000 may be a third network element 1033. In some embodiments, the transceiver module 1001 may be configured to receive second information sent by a first network element, in which the second information includes first parameter information, and the first parameter information indicates a traffic parameter of a data flow of a first service. Alternatively, the transceiver module 1001 may be configured to perform at least one of the communication steps such as sending and/or receiving (e.g., steps S2105, S2106, S2107, S2202, S2203) performed by the third network element 1033 in any one of the above methods, which will not be repeated here.

In some embodiments, the communication device 1000 may be a fourth network element 1034. In some embodiments, the transceiver module 1001 may be configured to receive fourth information sent by a third network element, in which the fourth information includes at least one of: first parameter information, used to indicate a traffic parameter of a data flow of a first service; or second parameter information, used for the fourth network element to perform QoS monitoring related to a traffic parameter. Alternatively, the transceiver module 1001 may be configured to perform at least one of the communication steps such as sending and/or receiving (e.g., steps S2106, S2111, S2114, S2202) performed by the fourth network element 1034 in any one of the above methods, which will not be repeated here. Alternatively, the processing module 1002 may be configured to perform at least one of other steps (e.g., steps S2110, S2113, S2201) other than the communication steps such as sending and/or receiving performed by the fourth network element 1034 in any one of the above methods, which will not be repeated here.

In some embodiments, the communication device 1000 may be a fifth network element 1035. In some embodiments, the transceiver module 1001 may be configured to send a data flow of a first service to a fourth network element, in which a data packet corresponding to the data flow includes a parameter value of a traffic parameter of the first service. Alternatively, the transceiver module 1001 may be configured to perform at least one of the communication steps such as sending and/or receiving (e.g., steps S2109, S2114) performed by the fifth network element 1035 in any one of the above methods, which will not be repeated here.

In some embodiments, the communication device 1000 may be an access network device 102. In some embodiments, the transceiver module 1001 may be configured to receive fifth information, in which the fifth information includes at least one of: first parameter information, used to indicate a traffic parameter of a data flow of a first service; or third information, used to indicate a measurement result obtained by QoS monitoring related to a traffic parameter. Alternatively, the transceiver module 1001 may be configured to perform at least one of the communication steps such as sending and/or receiving (e.g., steps S2108, SS2111) performed by the access network device 102 in any one of the above methods, which will not be repeated here. Alternatively, the processing module 1002 may be configured to perform at least one of other steps (e.g., step S2112) other than the communication steps such as sending and/or receiving performed by the access network device 102 in any one of the above methods, which will not be repeated here.

In some embodiments, the transceiver module may include a transmitting module and/or a receiving module. The transmitting module and the receiving module may be separate or integrated together. Alternatively, the transceiver module may be interchanged with a transceiver.

In some embodiments, the processing module may be one module or may include multiple sub-modules. Alternatively, the multiple sub-modules respectively perform all or some of the steps required to be performed by the processing module. Alternatively, the processing module may be interchanged with a processor.

FIG. 11A is a block diagram illustrating a communication device according to an embodiment of the disclosure. The communication device 11100 may be a network device (such as an access network device, a core network device, etc.), may also be a terminal (such as a user equipment, etc.), and may also be a chip, a chip system, or a processor, etc., that supports the network device to implement any one of the above methods, or a chip, a chip system, or a processor, etc., that supports the terminal to implement any one of the above methods, etc. The communication device 11100 may be configured to implement the method in the above method embodiments. For details, please refer to the description in the above method embodiments.

As illustrated in FIG. 11A, the communication device 11100 may include one or more processors 11101. The processor 11101 may be a general-purpose processor or a special-purpose processor. For example, the processor 11101 may be a baseband processor or a central processing unit. The baseband processor may be configured to process communication protocols and communication data, and the central processing unit may be configured to control communication devices (such as base stations, baseband chips, terminals, terminal chips, DU or CU, etc.) to perform computer programs and process computer program data. Alternatively, the communication device 11100 is configured to perform any one of the above methods. Alternatively, one or more processors 11101 may be configured to invoke instructions to cause the communication device 11100 to perform any one of the above methods.

In some embodiments, the communication device 11100 also includes one or more transceivers 11102. When the communication device 11100 includes one or more transceivers 11102, the transceiver 11102 performs at least one of the communication steps such as transmitting and/or receiving (e.g., steps S2101, S2103, S2105, S2106, S2107, S2108, S2109, S2111, S2114, S2202, S2203, S2204, and S2205, but not limited herein) in the above method, and the processor 11101 performs at least one of other steps (e.g., steps S2102, S2104, S2110, S2112, S2113, S2201, but not limited herein). In an alternative embodiment, the transceiver may include a receiver and/or a transmitter. The receiver and/or the transmitter may be separate or integrated together. Alternatively, the terms such as transceiver, transceiving unit, transceiving machine, transceiving circuit, interface circuit, interface, etc. may be used interchangeably; the terms such as transmitter, transmitting unit, transmitting machine, and transmitting circuit may be used interchangeably; and the terms such as receiver, receiving unit, receiving machine, and receiving circuit may be used interchangeably.

In some embodiments, the communication device 11100 also includes one or more memories 11103 for storing data. Alternatively, all or some of the memories 11103 may also be located outside the communication device 11100. In an alternative embodiment, the communication device 11100 may include one or more interface circuits 11104. Alternatively, the interface circuit 11104 is connected to the memory 11103. The interface circuit 11104 may be configured to receive data from the memory 11103 or other devices, and may be configured to send data to the memory 11103 or other devices. For example, the interface circuit 11104 may read data stored in the memory 11103 and send the data to the processor 11101.

The communication device 11100 in the description of the above embodiments may be a network device or a terminal, but the scope of the communication device 11100 described in the disclosure is not limited herein, and the structure of the communication device 11100 may not be limited by FIG. 11A. The communication device may be a stand-alone device or may be part of a larger device. For example, the communication device may be: (1) a stand-alone IC, a chip, a chip system or a subsystem; (2) a collection of ICs including one or more ICs, alternatively, the collection of ICs also including storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 11B is a block diagram illustrating a chip according to an embodiment of the disclosure. For a case that the communication device 11100 may be a chip or a chip system, please refer to the block diagram of the chip 11200 illustrated in FIG. 11B, which is not limited herein.

The chip 11200 includes one or more processors 11201. The chip 11200 is configured to perform any one of the above methods.

In some embodiments, the chip 11200 also includes one or more interface circuits 11202. Alternatively, the terms such as interface circuit, interface, and transceiver pin, etc. may be used interchangeably. In some embodiments, the chip 11200 also includes one or more memories 11203 for storing data. Alternatively, all or some of the memories 11203 may be located outside of the chip 11200. Alternatively, the interface circuit 11202 is connected to the memory 11203. The interface circuit 11202 may be configured to receive data from the memory 11203 or other devices, and the interface circuit 11202 may be configured to send data to the memory 11203 or other devices. For example, the interface circuit 11202 may read data stored in the memory 11203 and send the data to the processor 11201.

In some embodiments, the interface circuit 11202 performs at least one of the communication steps such as transmitting and/or receiving (e.g., steps S2101, S2103, S2105, S2106, S2107, S2108, S2109, S2111, S2114, S2202, S2203, S2204, S2205, but not limited herein) in the above method. The interface circuit 11202 performs the communication steps such as sending and/or receiving in the above method, for example, meaning that the interface circuit 11202 performs a data interaction between the processor 11201, the chip 11200, the memory 11203 or the transceiver device. In some embodiments, the processor 11201 performs at least one of other steps (e.g., steps S2102, S2104, S2110, S2112, S2113, S2201, but not limited herein).

The modules and/or devices described in the various embodiments, such as virtual devices, physical devices, and chips, may be combined or separated arbitrarily as needed. Alternatively, some or all of steps may be performed collaboratively by multiple modules and/or devices, which is not limited herein.

Embodiments of the disclosure also provide a storage medium for storing instructions. When the instructions are run on the communication device 11100, the communication device 11100 is caused to perform any one of the above methods. Alternatively, the storage medium is an electronic storage medium. Alternatively, the storage medium is a computer-readable storage medium, but is not limited herein, and may also be a storage medium readable by other devices. Alternatively, the storage medium may be a non-transitory storage medium, but is not limited herein, and may also be a transitory storage medium.

Embodiments of the disclosure also provide a program product. When the program product is executed by the communication device 11100, the communication device 11100 is caused to perform any one of the above methods. Alternatively, the program product is a computer program product.

Embodiments of the disclosure also provide a computer program. When the computer program is performed on a computer, the computer is caused to perform any one of the above methods.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A communication method, performed by a first network element, comprising:
receiving first information sent by a second network element, wherein the first information comprises at least one of:
first parameter information, used to indicate a traffic parameter of a data flow of a first service; or
first indication information, used to indicate supporting a dynamic change of a traffic parameter.

2. The method of claim 1, wherein the traffic parameter comprises at least one of:
a maximum burst size;
a maximum flow bit rate;
a periodicity;
an N6 jitter;
a burst arrived time;
an end of a burst;
an inter burst gap;
a codec type;
a tethered device type and/or requirement; or
a connection migration.

3. The method of claim 1 or 2, wherein the first information further comprises at least one of:
first requirement information, used to indicate a requirement of quality of service (QoS) monitoring related to the traffic parameter; or
second requirement information, used to indicate a requirement related to an event subscription.

4. The method of any one of claims 1 to 3, further comprising:
sending second information to a third network element, wherein the second information comprises the first parameter information.

5. The method of claim 4, wherein the second information further comprises first policy information, the first policy information is used for the QoS monitoring related to the traffic parameter, and the first policy information is determined based on the first information.

6. The method of any one of claims 1 to 5, further comprising:
determining a first rule based on the first information.

7. The method of any one of claims 1 to 6, further comprising:
receiving third information sent by the third network element, wherein the third information indicates a measurement result obtained by the QoS monitoring related to the traffic parameter; and
sending the third information to the second network element.

8. A communication method, performed by a second network element, comprising:
sending first information to a first network element, wherein the first information comprises at least one of:
first parameter information, used to indicate a traffic parameter of a data flow of a first service; or
first indication information, used to indicate supporting a dynamic change of a traffic parameter.

9. The method of claim 8, wherein the traffic parameter comprises at least one of:
a maximum burst size;
a maximum flow bit rate;
a periodicity;
an N6 jitter;
a burst arrived time;
an end of a burst;
an inter burst gap;
a codec type;
a tethered device type and/or requirement; or
a connection migration.

10. The method of claim 8 or 9, wherein the first information further comprises at least one of:
first requirement information, used to indicate a requirement of quality of service (QoS) monitoring related to the traffic parameter; or
second requirement information, used to indicate a requirement related to an event subscription.

11. The method of any one of claims 8 to 10, further comprising:
receiving third information sent by the first network element, wherein the third information indicates a measurement result obtained by the QoS monitoring related to the traffic parameter; and
updating the first parameter information based on the measurement result.

12. A communication method, performed by a third network element, comprising:
receiving second information sent by a first network element, wherein the second information comprises first parameter information, and the first parameter information indicates a traffic parameter of a data flow of a first service.

13. The method of claim 12, wherein the traffic parameter comprises at least one of:
a maximum burst size;
a maximum flow bit rate;
a periodicity;
an N6 jitter;
a burst arrived time;
an end of a burst;
an inter burst gap;
a codec type;
a tethered device type and/or requirement; or
a connection migration.

14. The method of claim 12 or 13, wherein the second information further comprises first policy information, and the first policy information is used for quality of service (QoS) monitoring related to the traffic parameter.

15. The method of any one of claims 12 to 14, wherein the second information indicates a first rule; and
the method further comprises:
determining a second rule based on the first rule, wherein the second rule is used for QoS handling on the data flow of the first service.

16. The method of any one of claims 12 to 15, further comprising:
sending fourth information to a fourth network element, wherein the fourth information comprises at least one of:
the first parameter information; or
second parameter information, used for the fourth network element to implement the QoS monitoring related to the traffic parameter.

17. The method of claim 16, wherein the second parameter information is determined based on at least one of: the first policy information, or configuration information of the third network element.

18. The method of any one of claims 12 to 17, further comprising:
receiving third information sent by the fourth network element, wherein the third information indicates a measurement result obtained by the QoS monitoring related to the traffic parameter; and
sending the third information to the first network element.

19. The method of any one of claims 12 to 18, further comprising:
sending fifth information to an access network device, wherein the fifth information comprises at least one of:
the first parameter information; or
the third information, used to indicate the measurement result obtained by the QoS monitoring related to the traffic parameter.

20. The method of claim 19, wherein the fifth information is sent via a next generation application protocol (NGAP).

21. A communication method, performed by a fourth network element, comprising:
receiving fourth information sent by a third network element, wherein the fourth information comprises at least one of:
first parameter information, used to indicate a traffic parameter of a data flow of a first service; or
second parameter information, used for the fourth network element to implement quality of service (QoS) monitoring related to a traffic parameter.

22. The method of claim 21, wherein the traffic parameter comprises at least one of:
a maximum burst size;
a maximum flow bit rate;
a periodicity;
an N6 jitter;
a burst arrived time;
an end of a burst;
an inter burst gap;
a codec type;
a tethered device type and/or requirement; or
a connection migration.

23. The method of claim 22, wherein the fourth information comprises the second parameter information; and
the method further comprises:
performing the QoS monitoring related to the traffic parameter based on the second parameter information.

24. The method of claim 23, further comprising at least one of:
sending third information to the third network element on a control plane; or
sending third information to a fifth network element on a user plane;
wherein the third information indicates a measurement result obtained by the QoS monitoring related to the traffic parameter.

25. The method of any one of claims 21 to 24, further comprising:
identifying the data flow of the first service based on the first parameter information, wherein a data packet corresponding to the data flow comprises a parameter value of the traffic parameter; and
sending the data flow to an access network device.

26. The method of claim 25, wherein the data flow is sent via a general packet radio service tunneling protocol-user plane (GTP-U) protocol.

27. A communication method, performed by a fifth network element, comprising:
sending a data flow of a first service to a fourth network element, wherein a data packet corresponding to the data flow comprises a parameter value of a traffic parameter of the first service.

28. The method of claim 27, wherein the traffic parameter comprises at least one of:
a maximum burst size;
a maximum flow bit rate;
a periodicity;
an N6 jitter;
a burst arrived time;
an end of a burst;
an inter burst gap;
a codec type;
a tethered device type and/or requirement; or
a connection migration.

29. The method of claim 27 or 28, further comprising:
receiving third information sent by the fourth network element, wherein the third information indicates a measurement result obtained by quality of service (QoS) monitoring related to the traffic parameter.

30. A communication method, performed by an access network device, comprising:
receiving fifth information sent by a third network element, wherein the fifth information comprises at least one of:
first parameter information, used to indicate a traffic parameter of a data flow of a first service; or
third information, used to indicate a measurement result obtained by quality of service (QoS) monitoring related to a traffic parameter.

31. The method of claim 30, wherein the traffic parameter comprises at least one of:
a maximum burst size;
a maximum flow bit rate;
a periodicity;
an N6 jitter;
a burst arrived time;
an end of a burst;
an inter burst gap;
a codec type;
a tethered device type and/or requirement; or
a connection migration.

32. The method of claim 30 or 31, wherein the fifth information is received via a next generation application protocol (NGAP).

33. The method of any one of claims 30 to 32, further comprising:
receiving the data flow of the first service sent by a fourth network element, wherein a data packet corresponding to the data flow comprises a parameter value of the traffic parameter.

34. The method of claim 33, wherein the data flow is received via a general packet radio service tunneling protocol-user plane (GTP-U) protocol.

35. A communication method, performed by a core network, wherein the core network comprises a first network element, a second network element, a third network element, and a fourth network element; and
the method comprises:
performing, by the first network element, the communication method of any one of claims 1 to 7;
performing, by the second network element, the communication method of any one of claims 8 to 11;
performing, by the third network element, the communication method of any one of claims 12 to 20; and
performing, by the fourth network element, the communication method of any one of claims 21 to 26.

36. A first network element, comprising:
a transceiver module, configured to receive first information sent by a second network element, wherein the first information comprises at least one of:
first parameter information, used to indicate a traffic parameter of a data flow of a first service; or
first indication information, used to indicate supporting a dynamic change of a traffic parameter.

37. A second network element, comprising:
a transceiver module, configured to send first information to a first network element, wherein the first information comprises at least one of:
first parameter information, used to indicate a traffic parameter of a data flow of a first service; or
first indication information, used to indicate supporting a dynamic change of a traffic parameter.

38. A third network element, comprising:
a transceiver module, configured to receive second information sent by a first network element, wherein the second information comprises first parameter information, and the first parameter information indicates a traffic parameter of a data flow of a first service.

39. A fourth network element, comprising:
a transceiver module, configured to receive fourth information sent by a third network element, wherein the fourth information comprises at least one of:
first parameter information, used to indicate a traffic parameter of a data flow of a first service; or
second parameter information, used for the fourth network element to implement quality of service (QoS) monitoring related to a traffic parameter.

40. A fifth network element, comprising:
a transceiver module, configured to send a data flow of a first service to a fourth network element, wherein a data packet corresponding to the data flow comprises a parameter value of a traffic parameter of the first service.

41. An access network device, comprising:
a transceiver module, configured to receive fifth information, wherein the fifth information comprises at least one of:
first parameter information, used to indicate a traffic parameter of a data flow of a first service; or
third information, used to indicate a measurement result obtained by quality of service (QoS) monitoring related to a traffic parameter.

42. A first network element, comprising:
one or more processors; and
a memory storing instructions;
wherein when the instructions are performed by the first network element, the first network element is caused to implement the communication method of any one of claims 1 to 7.

43. A second network element, comprising:
one or more processors; and
a memory storing instructions;
wherein when the instructions are performed by the second network element, the second network element is caused to implement the communication method of any one of claims 8 to 11.

44. A third network element, comprising:
one or more processors; and
a memory storing instructions;
wherein when the instructions are performed by the third network element, the third network element is caused to implement the communication method of any one of claims 12 to 20.

45. A fourth network element, comprising:
one or more processors; and
a memory storing instructions;
wherein when the instructions are performed by the fourth network element, the fourth network element is caused to implement the communication method of any one of claims 21 to 26.

46. A fifth network element, comprising:
one or more processors; and
a memory storing instructions;
wherein when the instructions are performed by the fifth network element, the fifth network element is caused to implement the communication method of any one of claims 27 to 29.

47. An access network device, comprising:
one or more processors; and
a memory storing instructions;
wherein when the instructions are performed by the access network device, the access network device is caused to implement the communication method of any one of claims 30 to 34.

48. A communication system, comprising:
a first network element, configured to implement the communication method of any one of claims 1 to 7;
a second network element, configured to implement the communication method of any one of claims 8 to 11;
a third network element, configured to implement the communication method of any one of claims 12 to 20;
a fourth network element, configured to implement the communication method of any one of claims 21 to 26;
a fifth network element, configured to implement the communication method of any one of claims 27 to 29;
an access network device, configured to implement the communication method of any one of claims 30 to 34.

49. A storage medium storing instructions, wherein when the instructions are run on a communication device, the communication device is caused to implement the method of any one of claims 1 to 35.
